# EUROPEAN PATENT APPLICATION

(11) **EP 1 460 826 A1**
(43) Date of publication of application: **22.09.2004**
(21) Application number: 02728206.0
(22) Date of filing: 31.05.2002
(51) Int. Cl.: H04M 11/00, H04M 1/66, H04B 1/59, H04Q 7/32, E05B 49/00, G07F 7/08, A47G 29/12

(54) **WIRELESS AUTHENTICATION SYSTEM**

(30) Priority: 28.12.2001 CN 01144883
(71) Applicant: Super Wave Co., Ltd., Minato-ku, Tokyo 105-0013 (JP)
(72) Inventor: SASAKURA, Toyoki, c/o Super Wave Co., Ltd., Minato-ku, Tokyo 105-0013 (JP); MIYAMOTO, Kenichi, c/o Super Wave Co., Ltd., Minato-ku, Tokyo 105-0013 (JP)
(74) Representative: HOFFMANN - EITLE
(86) International application number: PCT/JP2002/005342
(87) International publication number: WO 2003/058936

(57) **Abstract**

When a cellular telephone is misplaced or robbed, i.e., when the cellular telephone is apart from its owner, the use of the cellular telephone is limited, an unauthorized use of the cellular telephone is prevented and the owner is warned that the cellular telephone is apart so that the owner may recognize the separation. A use limit apparatus includes a signal transmission Unit (10) and a use limit withdrawing unit provided integrally with the apparatus whose use is to be limited. Each of the units includes a transmitter and a receiver, and an identification code signal from the transmission unit (10) is received by the withdrawing unit. According to the signal, a withdrawing signal of the use limit is output. When an acknowledgement code signal is returned, the transmission unit (10) decides that the state is normal. When these units are separated by more than a predetermined distance, the signal reception level is lowered, the withdrawing unit stops the withdrawing signal, and the transmission unit (10) gives warning.

## Description

### TECHNICAL FIELD

The present invention relates to a wireless authentication system for performing authentication by means of radio signals, and more particularly, to a wireless authentication system having a use restriction function for an appliance in order to prevent illegal use or unauthorized use in the event that an appliance, such as a portable telephone, or the like, is lost or is stolen.

Furthermore, the invention relates to a wireless authentication system which carries out multiple-level authentication and settlement relating to payment cards, including credit cards.

Moreover, the present invention relates in particular to a wireless authentication system having functions for locking and unlocking a container, including a locker, whereby not only can a user deposit his or her own luggage, but luggage can also be deposited and collected by different persons.

### BACKGROUND ART

Firstly, in mobile communications systems, with the increase in the use of portable telephones, the loss or theft has also increased, and situations arise where a telephone comes into the hands of someone other than the owner or user, and is used without authorization by that person. Conventionally, use restriction functions have been appended to portable telephones, as a countermeasure against unauthorized use of this kind. Proposed methods for use restriction functions of this kind include a method in which the use restriction is released by means of an PIN number (ID) of the owner or user, and a method in which an incoming sub-address signal is appended to the standard telephone number, and the like.

In another proposed method, the owner or user carries, in his or her pocket, or the like, a card or a thin unit having a transmitter to transmit radio signals, and if the owner or user moves a prescribed distance or more away from the portable telephone, then this separation will be detected due to a decline in the reception intensity level. On the basis of this detection signal, a signal indicating disconnection of the communications function is transmitted to the portable telephone so that the internal operation thereof is restricted.

However, in the case of a restriction function based on PIN numbers, if the use restriction based on an authentication code is left in a released state, then if the portable telephone is lost or stolen, it will still be possible to use the portable telephone, and it will not be possible to restrict use. In the case of a restriction function based on an incoming sub-address signal method, various locking functions are applied if an incoming sub-address signal is received. Therefore, if the user or owner is slow to realize that the telephone has been lost or stolen, then it may arise that the telephone has already been used illegally, by the time that processing for restricting illegal use by means of the incoming sub-address signal has been carried out. Therefore it is not possible to prevent illegal use of this kind.

In a method which combines a restricting unit provided in the portable telephone, and a card or unit, if the owner or the user of the card or unit moves a prescribed distance or more away from the portable telephone, due to loss or theft. Then the use restriction function activates and it becomes impossible to use the portable telephone. However, since means for alerting the owner or user of the card or unit to the fact that the telephone has been lost or stolen are not provided, it is not possible to prevent loss or theft itself. If the owner or user is slow to notice the loss or theft, illegal situations can be envisaged wherein, for example, modifications are made to the telephone during that period, whereby the signal for releasing the use restriction is decrypted and the use restriction function is temporarily released, and hence illegal use or unauthorized use cannot be prevented.

Furthermore, if the appliance subjected to this use restriction is a personal computer, word processor or portable telephone, cases may occur in which information relating to the owner or user is extracted by e-mail or transferred by other means, from the appliance to which the system is applied, without permission. This extraction of information, while not involving actual theft or loss of the appliance, does constitute illegal use or unauthorized use, but it is difficult for the owner or user to notice the fact that this type of use has occurred. In many cases, he or she is slow to become aware of this fact.

Secondly, in the field of financial payments, in recent years, settlement means with a credit card instead of cash payment has become increasingly widespread, avoiding the dangers of carrying large amounts of money in the form of cash. Allowing users to enjoy the convenience of settling payments by credit card only, the use of this kind of payment system is set to increase further. However, although convenience is improved, theft or forgery of cards due to momentary lapse in the attention of the card bearer, or the like, is also increasing rapidly. Suitable countermeasures to this are extremely important in view of the massive spread of card payment systems in the future.

Fraud based on the theft or falsification of credit cards has increased steadily in recent years, and in 1999, for example, the total amount of this type of fraud in Japan was reported to be 27.2 billion yen. Furthermore, with the appearance of debit cards, the number of card users tends to increase, and consequently. It is expected that card-related crime will also continue to increase. Against the background of increasing card-related crime, it has been claimed that security in card payment systems is insufficient.

In current payment systems based on credit cards, when a customer hands over his or her credit card to make payment, it is inserted into a card reader provided in the store. The data, such as the credit card number, or the like, is read out, and then this data is transferred to an authentication center, where the presence of a theft report, the validity date of the card, and the like, are checked. Permission to use the card or denial of use being confirmed, a confirmation signal is returned to the card reader. If permission is granted, the payment process is completed by means of the user signing. Furthermore, in recent years, it has also become possible to confirm that the person using the card is the authorized cardholder, by printing a picture of that person's face on the card.

The confirmation by the authentication center and the signature of the cardholder are important security measures, but they cannot be regarded as sufficient. In nearly all cases, current card security systems are based on confirmation made by the cardholder him or herself, and the cardholder's signature cannot currently be regarded as providing adequate confirmation. Furthermore, if the information contained in one card can be stolen by some method or other, a false card can be created readily. A debit card, or the like, requires input of a four-digit PIN number, but many people use a simple number, such as their own date of birth, or their home telephone number, or the like. If the card is stolen together with a wallet, or the like, them this information can be identified readily from documents such as a driver's license, or the like.

Thirdly, in the field of safe boxes, as is generally known, for example, a closed type key is used to lock a safe in which cash, valuables, stock certificates, deposit books, and the like, are kept. An open type key is used for a locker in which luggage, documents, or the like, are kept. In addition to mechanical key systems, electronic keys are also used which lock or unlock the box by inserting a card. But in either of these cases, in principle, only the user having the key or card key is able to lock or unlock the locker or box. One typical example of a locker system is a commonly known coin-operated locker found in the vicinity of stations and other public places so that a great number of such lockers are provided and their rate of use is'also very high.

As is generally known, in a coin locker, usually, the door is opened, the luggage is inserted, and the locker can then be locked by inserting a coin, whereupon the key is turned to lock the locker, and the key is removed. After the user has occupied the locker for a prescribed period of time, he or she retrieves the luggage stored therein by inserting the key again and releasing the lock. On the other hand, in recent years, instead of coin-operated lockers, individual lockers for contractors, and the like, have also become widespread. The contractors are allowed to use and occupy these lockers with their belongings for a prescribed period of time, provided that they pay a prescribed subscription.

In the case of the general lockers or the individual lockers described above, the lockers can only be open and close by means of a key that is unique to that locker. Unless the key is loaned to someone else, any other.person than the principal user cannot open or close the locker. Consequently, if it could be made possible for luggage, or the like, to be transferred between one person and another, by means of a locker, without transferring the key, this would further improve the convenience of lockers. Hence there is a strong demand for this type of capability. However, if luggage, or the like, is to be transferred from one person to another, it inevitably causes fears that the safety (security) of the lockers may be jeopardized, and hence they may be misused. Accordingly, there is requirement to guarantee security and to prevent misuse, while also improving convenience of use.

### DISCLOSURE OF THE INVENTION

The first object of the present invention is to provide a wireless authentication system having appliance use restriction functions whereby, if an appliance, such as a portable telephone, or the like, is separated from the owner or user, as a result of loss, theft, or the like, then in order to prevent extraction of information the appliance itself can be made unusable if it is wished to avoid unauthorized use by another person, and furthermore, the fact that the appliance has been separated by a prescribed distance or more can be reported to the owner and/or the user of the appliance to which the system is applied.

The second object of the present invention is to provide a wireless authentication system whereby damages from crimes related to illegal use of cards in card payment system, due to theft, falsification, or the like, of the card, can be minimized by appending simple means to the system.

The third object of the present invention is to provide a wireless authentication system having a function for locking and unlocking a container whereby one container can be used by two contractors or by one contractor and one non-contractor, in such a manner that luggage can be transferred from one person to another.

In order to achieve the first object, the wireless authentication system according to the first aspect of the invention is a wireless authentication system having a signal transmitting device and a use restriction releasing device, and comprising functions for restricting use of an appliance to which it is applied; wherein the signal transmitting device comprises: a first transmitter for transmitting a prescribed first code signal at a prescribed intensity by means of a radio signal, and a first receiver for receiving a prescribed second code signal transmitted by the use restriction releasing device by means of a radio signal; and a first judging section for outputting a warning signal if the signal level of the second code signal received by the first receiver is less than a prescribed value; the use restriction releasing device comprises: a second transmitter for transmitting the second code signal at a prescribed intensity by means of a radio signal; and a second receiver for receiving the first code signal transmitted by the first transmitter by means of a radio signal; and a second judging section whereby a use restriction releasing signal for releasing the use restriction of the appliance to which the system is applied is transmitted to the appliance, if the first code signal received by the second receiver is the identification signal for that appliance, and if the signal level of the first code signal is equal to or greater than a prescribed value, and whereby the transmission of the use restriction releasing signal is halted if the signal level is less than the prescribed value.

The wireless authentication system for an appliance according to the first aspect of the present invention is a wireless authentication system having a signal transmitting device and a use restriction releasing device, and comprising functions for restricting use of an appliance to which it is applied; wherein the signal transmitting device comprises: a first transmitter for transmitting a prescribed first code signal at a prescribed intensity by means of a radio signal, and a first receiver for receiving a prescribed second code signal transmitted by the use restriction releasing device by means of a radio signal; and a first judging section for outputting a warning signal if the signal level of the second code signal received by the first receiver is less than a prescribed value; the use restriction releasing device comprises: a second transmitter for transmitting the second code signal at a prescribed intensity by means of a radio signal; and a second receiver for receiving the first code signal transmitted by the first transmitter, by means of a radio signal; and a second judging section whereby the transmission of a use restricting signal for restricting the use of the appliance to which the system is applied, to the appliance, is halted, if the first code signal received by the second receiver is the identification signal for that appliance, and if the signal level of the first code signal is equal to or greater than a prescribed value, and'whereby the use restricting signal is transmitted to the appliance, if the signal level is less than the prescribed value.

The wireless authentication system according to the first aspect of the present invention comprises a use restriction releasing device and a signal transmitting device. The use restriction releasing device is incorporated integrally into the appliance subject to use restriction, so that it may be provided externally on the appliance, or it may be incorporated internally. Preferably, the signal transmitting device is designed as thin and lightweight as possible, such as a card shape for example, and preferably, it is carried by the owner or user of the appliance, such as portable telephone, or the like, in his or her breast pocket, or the like.

The first code signal transmitted by the signal transmitting device is received by the use restriction releasing device. If this first code signal is the identification signal for that device, and if the signal level of the first code signal is equal to or greater than a prescribed value, this indicates that the appliance to which the system is applied is situated within a prescribed distance range of the signal transmitter device.
Consequently, the use restriction releasing device transmits a use restriction releasing signal for releasing the use restriction of the appliance to which the system is applied, to the appliance, or alternatively, it halts the transmission of a use restricting signal for restricting use, to the appliance. By this means, the appliance becomes usable.

If, on the other hand, the signal level of the first signal is less than the prescribed value, then this indicates the appliance is separated by a prescribed distance or more, and hence the use restriction releasing device halts the transmission of the use restriction releasing signal to the appliance, or it starts transmission of a use restricting signal. Thereby, the use of the appliance is restricted, and hence the appliance is in a state in which it cannot be used. Since the appliance may be lost or stolen, or the like, in cases where it is separated by a prescribed distance or more, illegal use of the appliance, and the like, is prevented by making it impossible to use the appliance.

At the same time, the second code signal transmitted by the use restriction releasing device is received by the signal transmitting device. Similarly, if the signal level of this second code signal is equal to or below the prescribed value, the signal transmitting device issues a warning signal. Thereby, the owner or user of the appliance becomes aware of the loss or theft of the appliance, and hence he or she can take measures against them immediately.

It is also possible for the use restriction releasing device to output a warning signal, if the signal level of the first code signal received thereby is less than a prescribed value. This is particularly effective in cases where it is sought to prevent the extraction of stored information, for instance, cases where the appliance is a personal computer.

It is also possible that the first code signal and the second code signal are the same code signal; and the use restriction releasing device transmits the first code signal received by the second receiver, as the second code signal, by means of the second transmitter, after the signal transmitting device has transmitted the first code signal by means of the first transmitter.

Furthermore, it is also possible that the signal transmitting device transmits the second code signal received by the first receiver, as the first code signal, by means of the first transmitter, after the use restriction releasing device has transmitted the second code signal by means of the second transmitter.

In order to achieve the second object, the wireless authentication system according to the second aspect of the invention is a wireless authentication system having an authenticated settlement device, an authentication device, and an optional authentication device, for performing multiple-level authentication and settlement for payment cards, including credit cards; the authenticated settlement device comprises: a storing section for storing cardholder data including card information for the payment cards and identification information for the cardholders; a first authenticating section for performing first authentication by comparing the card information transmitted by a card settlement terminal having a card reader, with card information contained in the cardholder data; and a first transmitting section for transmitting the identification information for the cardholder corresponding to the card information transmitted by the card settlement terminal, if both kinds of card information are matching as a result of the first authentication performed by the first authenticating section; the optional authentication device comprises: a second transmitting section for transmitting the identification information transmitted from the first transmitting section to the authentication device, by means of a radio signal; and a second receiving section for receiving identification information transmitted from the authentication device by means of a radio signal; and the authentication device comprises: a second authenticating section for performing second authentication by comparing the identification information transmitted by the second transmitting section by means of a radio signal, with the identification information held by the authentication device itself; and a third transmitting section for transmitting the identification information held by the authentication device to the optional authentication device by means of a radio signal, if the two kinds of identification information are matching.

In the wireless authentication system according to this second aspect, in addition to the authentication based on the card information in a payment card, such as a credit card, or the like, authentication is carried out by the authentication device and the optional authentication device, or the authentication device alone, in other words, multiple-level authentication is carried out.

Firstly, when the card information is read in, this card information is transmitted to the authenticated settlement device, where authentication is carried out by checking that this card information matches the registered cardholder data. This authentication is the basic authentication process of the credit card settlement system, and is sufficient provided that the card is not used illegally due to theft or falsification of the card.

On the other hand, if the card is used illegally, this basic authentication alone is insufficient. Authentication of different formats from the basic authentication is carried out, in a multi-layered fashion, thereby preventing illegal use in advance. This multiple-level authentication involves additionally carrying out authentication of at least one other format. Although there is no limit on the number of additional layers of authentication carried out, since it will take a long time to complete authentication if the number of additional authentication operations is too large, several authentication operations (namely, 3 or 4 operations) are preferably carried out, in order to avoid causing problems from a practical viewpoint.

In the multiple-level authentication, the identification information for the cardholder, which is different to the card information, is transmitted from an authenticated settlement device located in an authentication center, payment settlement center, or the like, to the authentication device carried by the cardholder, via the optional authentication device provided in the card payment terminal, or the like. The authentication device compares the identification information held by itself with the identification information transmitted by the authentication settlement device. By confirming a match as a result of this comparison, at least one further stage of authentication is carried out.

After confirmation by the authentication device, if a match is confirmed, the identification information is transmitted by the authentication device to the optional authentication device. The card payment terminal, or the like, provided with the optional authentication device may carry out the settlement process regarding reception of the identification information as completion of authentication. Furthermore, if it is sought to carry out additional authentication thereafter, this identification information is returned to the authenticated settlement device. Upon receiving this information, the authenticated settlement device performs a further level of authentication by confirming again that this identification information matches the identification information registered. When this multiple-level authentication has been completed, the authentication is confirmed and settlement processing is carried out.

Moreover, if a further level of authentication is to be carried out, it is possible to make use of a portable terminal, such as a portable telephone, or the like. In this case, after the third level of authentication described above has been completed, a completion signal is transmitted to the authentication device, which then connects a portable terminal to order automatic call. After the portable terminal connects automatically to the authenticated settlement device, the authenticated settlement device performs a fourth level of authentication by confirming the telephone number of the portable telephone, or the like, whereupon payment settlement is carried out on the basis of the corresponding confirmation signal when this authentication has been completed. In this way, the multiple-layer authentication comprises authenticating elements of various formats. The greater the number of authentication layers adopted, the higher the security that can be ensured.

The wireless authentication system for carrying out the aforementioned multiple-level authentication by means of one-way communications is a wireless authentication system comprising an authenticated settlement device, and an authentication device including a portable terminal carried by a cardholder, for performing multiple-level authentication and settlement relating to payment cards, including credit cards; wherein the authenticated settlement device comprises: a storing section for storing cardholder data including card information for the payment cards and identification information for the cardholders; an authenticating section for performing authentication by comparing the card information transmitted by a card settlement terminal having a card reader, with card information contained in the cardholder data; and a transmitting section for transmitting data indicating that authentication has been carried out, to the authentication device, if authentication is carried out by the authenticating section; wherein the authentication device comprises a display section for displaying the data transmitted by the transmitting section.

In this system, an authentication device comprising a portable terminal, such as a portable telephone, or the like, is used for carrying out multiple-level authentication. After the basic authentication based on the card information has been carried out, data indicating that this authentication has been performed is transmitted from the authenticated settlement device to the authentication device. If the authentication device is a portable telephone, this data may be transmitted to the portable telephone by means of a portable communications network, on the basis of the portable telephone number of the cardholder stored in the storing section. The fact that a call has been made by the authenticated settlement device is, for example, is displayed on the display section of the authentication device (for example, the display section of the portable telephone). By this means, double-layer authentication is carried out.

The authentication signal may be transmitted from the authentication device. In this case, the transmission by means of the telephone, or the like, from the authentication device held by the cardholder to the authenticated settlement device, is carried out in parallel with the reading out of the card information. After receiving this transmission in the authenticated settlement device, authentication by confirming that the telephone number matches that of the telephone number, and the like, in the data of the cardholder, is carried out in parallel with the basic authentication, so that final authentication is achieved and payment settlement is carried out when all of the authentication layers have been confirmed in the multiple authentication process.

A further system for performing multiple-level authentication by means of one-way communications is a wireless authentication system comprising an authenticated settlement device, an authentication device, and an optional authentication device, for performing multiple-level authentication and settlement relating to payment cards, including credit cards; wherein the authenticated settlement device comprises: a storing section for storing cardholder data including card information for the payment cards and identification information for the cardholders; a first authenticating section for performing authentication by comparing the card information transmitted by the card settlement terminal having a card reader, with card information contained in the cardholder data; and a second authenticating section for performing authentication by comparing the identification information of the cardholder transmitted from the authentication device through the optional authentication device, with the identification information contained in the cardholder data; wherein the optional authentication device comprises a transmitting and receiving section for receiving identification information transmitted by the authentication device, and for transmitting the received identification information to the authenticated settlement device; and the authentication device comprises a transmitting section for transmitting the identification information held in itself.

In this card authentication system, there are an optional authentication device and an authentication device. After basic authentication has been completed by reading out the card information, multiple-level authentication is carried out by means of a one-way signal from the authentication device. If the cardholder carrying the authentication device approaches the optional authentication device and hence the authentication device is located within a prescribed range from the optional authentication device, then the identification information of the authentication device is transmitted to the optional authentication device.

The optional authentication device transmits this identification information to the authenticated settlement device. The authenticated settlement device compares this identification information with the cardholder data registered in the storing section, and carries out multiple-level authentication by confirming that it matches the cardholder data.

In order to achieve the third object, the wireless authentication system according to the third aspect of the invention is a wireless authentication system comprising: a locking device, provided on a container having a door equipped with an electronic lock, for locking and unlocking the electronic lock of the door, a management device for managing the locking device, portable devices held by users including a depositor who deposits luggage in the container and a recipient who receives the deposited luggage, and having a function for locking and unlocking the door; wherein the locking device comprises: a first receiving section for receiving identification information for a depositor or recipient transmitted by the portable device, by means of radio signals; a transmitting and receiving section for transmitting and receiving the identification information or a match signal, to and from the management device; a first input section for inputting the identification information of the recipient; a second input section for inputting confirmation of the depositor or recipient; and a control section whereby, if the container is in an unused state, and if the signal level of the identification information received from the first receiving section is equal to or above a prescribed value, then the identification information is transmitted to the management device by the transmitting and receiving section, the use restricted state of the electronic lock is released when a match signal is received from the management device by the transmitting and receiving section after transmitting the identification information, and the electronic lock is locked upon input of confirmation to the second input section, whereas if the container is in a used state, if the signal level of the identification information received from the first receiving section is equal to or above a prescribed value, and if the identification information received by the receiving section and the identification information input to the first input section are matching, then the use restricted state of the electronic lock is released and the electronic lock is unlocked upon input of confirmation to the second input section; and the management device comprises: a storing section for storing identification information of the user; and a judging section for comparing the identification information transmitted by the locking device in an unused state and the identification information stored in the storing section, and transmitting the match signal to the locking device if the information is matching; and the portable device comprises a transmitting section for holding the identification information of the user of the portable device, and transmitting the identification information thus held to the locking device.

In the wireless authentication system having the foregoing composition, a person who has contracted to join a scheme carries a portable device. If the system is used by a plurality of contractors, luggage is deposited by one depositor, in one container, for one recipient. If a plurality of depositor wishes to deposit luggage for the same recipient, they use different containers, respectively.

If the container is in an unused state, the door of the electronic lock is released, and the electronic lock is set electrically to a use restricted state. If a depositor carrying a portable device approaches within a prescribed distance range of a container, the identification information therefrom is received by the locking device and is checked, via the management device.

The management device confirms whether or not the identification information corresponds to a registered contractor, and it sends a match signal to the locking device. By means of this match signal, the electrical use restricted state of the electronic lock is released, and the electronic lock becomes lockable. After the depositor specifies the recipient, opens the door and puts the luggage into the container, the electronic lock is locked by inputting confirmation to the locking device.

If the recipient moves into the vicinity of the container, the locking device checks the identification information from the portable device thereof. If it identifies that that person is the specified recipient, the electrical use restricted state of the electronic lock is released. Thereby, it becomes possible to unlock the electronic lock. The recipient unlocks the electronic lock by inputting a confirmation to the locking device. Accordingly, the recipient is able to withdraw the luggage from the container.

A further wireless authentication system according to the third aspect of the present invention is a wireless authentication system comprising: a locking device, provided on a container having a door equipped with an electronic lock, for locking and unlocking the electronic lock of the door, a management device for managing the locking device, a portable device held by a recipient of luggage deposited in the container, and having a function for locking and unlocking the door; wherein the locking device comprises: a first receiving section for receiving identification information for the recipient transmitted by the portable device, by means of radio signals; a second receiving section for receiving an unlocking instruction from the management device; a first input section for inputting the identification information of the recipient; a second input section for inputting confirmation of the depositor or recipient; and a control section whereby if the container is in an unused state, the use restricted state of the electronic lock is released on the basis of an unlocking instruction received from the second receiving section, the electronic lock is locked upon input of confirmation to the second input section, whereas the container is in a used state, if the signal level of the identification information received by the first receiving section is equal to or above a prescribed value, and if the identification information received by the first receiving section and the identification information input by the first input section are matching, then the use restricted state of the electronic lock is released and the electronic lock is unlocked upon input of confirmation to the second input section; and the management device comprises: a transferring section for transferring a communication by means of a telephone line from a depositor of luggage into the container, to a telephone held by the recipient; and a first transmitting section for transmitting a permission to use the container on the basis of a communication by means of the telephone line from the recipient, as the unlocking instruction; and the portable device comprises a second transmitting section for holding identification information for a recipient and transmitting the identification information thus held to the locking device.

In this case, the recipient must be a contractor, but the depositor does not have to be a contractor. The depositor contacts the recipient, by portable telephone, or the like, via the management device. If the recipient agrees, an unlocking instruction is transmitted to the locking device, from the management device, upon an instruction signal by telephone from the recipient, whereby the use restricted state of the container is released. Thereupon, when confirmation is input by an operation of the depositor, the electronic lock is locked with the luggage contained inside the container. Since the recipient is a contractor, the operation of unlocking is the same as that described above.

An outputting section is provided in the portable device carried by the recipient. By outputting identification information from the locking device (by means of a display, sound output, or the like), it is possible to inform the recipient the fact that luggage which he or she is to retrieve has been deposited in a container.

### BRIEF DESCRIPTION OF THE DRAWINGS

Fig. 1 is a general approximate view of an example wherein a use restricting device according to a first embodiment of the present invention is applied to a portable telephone;
Fig. 2 is a general block diagram of a signal transmitter device;
Fig. 3 is a general block diagram of a use restriction releasing device;
Fig. 4 is a detailed compositional example of a matching and adding circuit;
Fig. 5 is an illustrative diagram of an identification signal and transmission timing;
Fig. 6 is an illustrative diagram of the compositional contents of an identification number;
Fig. 7 is an illustrative diagram of a pulse compression signal and pulse compression processing;
Fig. 8 is an illustrative diagram of the relationship between the detected waveform of the reception signal and a confirmation signal;
Fig. 9 is an illustrative diagram of a reception signal level and an interval for judging the signal level;
Fig. 10 is a general conceptual diagram of a wireless authentication system according to a second embodiment of the present invention,
Fig. 11 is a general block diagram of a wireless authentication system according to the second embodiment;
Fig. 12 is a block diagram of an optional authentication device;
Fig. 13 is a block diagram of an authentication device;
Fig. 14 is a flowchart of the processing operations performed by a card information processing device;
Fig. 15 is one example of a card member management table;
Fig. 16 is an approximate block diagram of a wireless authentication system based on one-way communications according to a further embodiment;
Fig. 17 is an approximate block diagram of a wireless authentication system based on one-way communications according to a further embodiment;
Fig. 18 is an external view of a wireless authentication system according to a third embodiment of the present invention;
Fig. 19 is an approximate block diagram of the above;
Fig. 20 is an approximate block diagram of the portable device;
Fig. 21 is an approximate block diagram of a locking device; and
Fig. 22 is an approximate block diagram of a wireless authentication system according to a fourth embodiment of the present invention.

### BEST MODE FOR CARRYING OUT THE INVENTION

### (First embodiment)

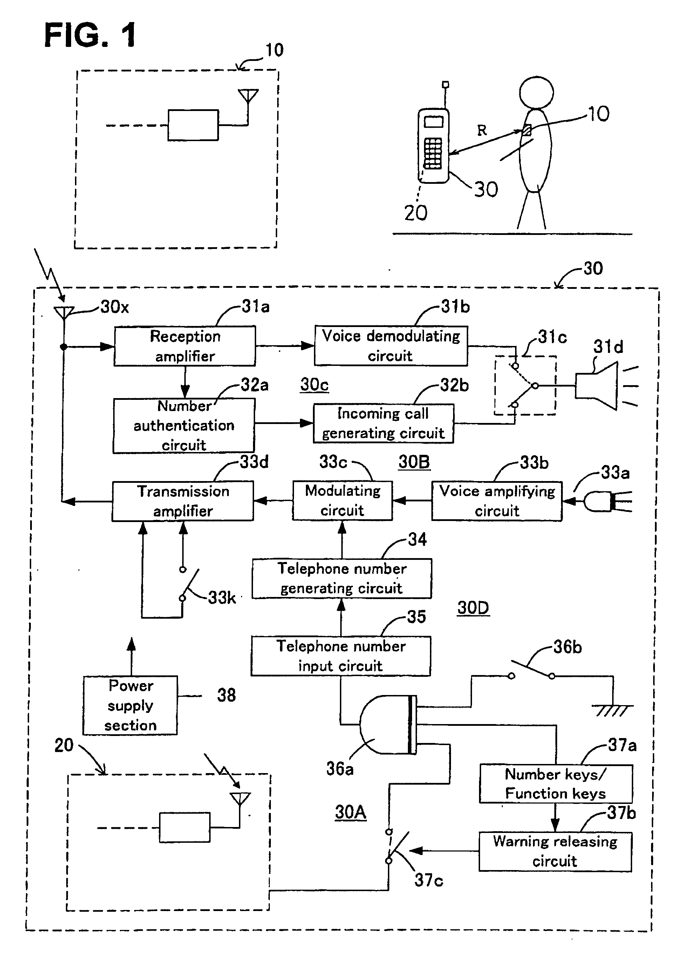

Below, a first embodiment of the present invention is described. Fig. 1 is an approximate general block diagram of an example wherein the use restriction device according to the first embodiment is applied to a portable telephone. Numeral 10 denotes a small, card-type signal transmitting device, numeral 20 denotes a use restriction releasing device, and numeral 30 denotes a portable telephone. The signal transmitting device 10 (hereinafter, "transmitting device 10") is an independent card type device which is separate from the portable telephone 30. The use restriction releasing device 20 (hereinafter, "releasing device") is incorporated into the portable telephone 30. The releasing device 20 may also be installed onto the outside of the portable telephone 30.

In the portable telephone 30, a use restriction circuit 30A for a use restricting function is appended to the standard conventional circuitry. The transmitting device 10 is inserted into a breast pocket, or the like, by the owner or user of the portable telephone 30, and it is used, together with the portable telephone 30, within a prescribed distance range. The transmitting device 10 may be of any format other than a card format, provided that it can be carried conveniently, such as a key, for example.

The actual portable telephone 30 is a generic type of telephone, and hence the composition thereof can be described simply. The portable telephone 30 comprises a transmitting system 30B, a receiving system 30C, a telephone number input system 30D, and a power source 38. In the transmitting system 30B, the voice is converted into a voice signal by the microphone 33a, whereupon it is amplified by a voice amplifying circuit 33b, modulated into a carrier wave signal by a modulating circuit 33c, and then amplified by a transmission amplifier 33d, before being transmitted towards a telephone exchange from the transceiver antenna 30x. A call switch 33k is provided in the transmission amplifier 33d. By operating this call switch 33k, the call mode is established.

The following operation is done in the receiving system 30C. An incoming call initiation signal is amplified by the reception amplifier 31a. Number authentication is carried out by the number authentication circuit 32a. An incoming call ring sound is then issued by the incoming call sound generating circuit 32b, via the hook switch 31c, and is output by the speaker 31d. When the hook switch 31c is switched on the basis of this incoming call sound, the call assumes a voice input mode. The reception signal amplified by the reception amplifier 31a is demodulated into a voice signal by the voice demodulating circuit 31b. This voice signal is then sent to the speaker 31d via the hook switch 31c, and is reproduced as a voice sound.

The following operation is done in the.telephone number input system 30D. A circuit is connected to the AND gate 36a of a use restriction circuit 30A, in such a manner that the operational input of a key operation invalidation switch 36b, as well as the signals from number keys and function keys 37a, and a switch 37c are input to same. If the switch 37c is operated by the output of a warning releasing circuit 37b based on an PIN number input via the number keys and function keys 37a, and if a call number input mode is established based on the condition that signals from the switches 36b and 37c, and a use restriction releasing signal from the releasing device 20 have been established, then a telephone number input by means of the number and function keys 37a is sent to the telephone number input circuit 35, via the gate 36a, and then is transmitted from the transceiver antenna 30x, via the telephone number generating circuit 34, the modulating circuit 33c, and the transmission amplifier 33d.

The power supply in the power supply section 38 which supplies electrical power to the circuitry of the various systems described above is operated by means of a power switch (not illustrated) of the portable telephone 30. This power supply may be provided commonly to the releasing device 20 described in the compositional examples later. Alternatively, the releasing device 20 may be provided with a separate, independent power supply. If a common power supply is used, then it is ensured that even if the power switch to the portable telephone 30 is turned off, power is still supplied to the releasing device 20. The reasons for this are described hereinafter.

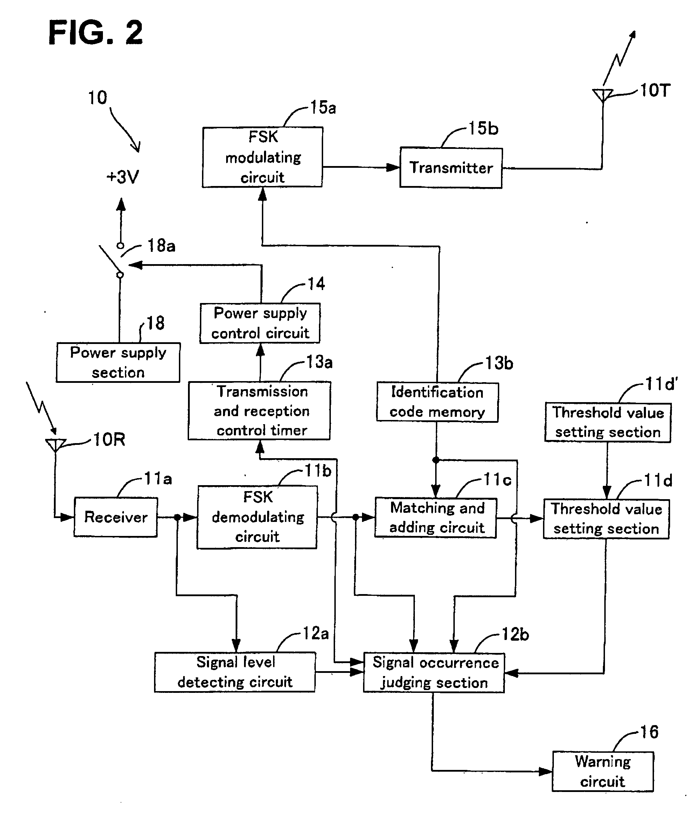

Fig. 2 shows an example of the composition of the transmitting device 10. The transmitting device 10 comprises a transmitter 15b which transmits an identification signal containing a previously determined unique code signal, from a transmission antenna 10T, and a receiver 11a which receives a confirmation signal returned by the transmitter of the releasing device 20 described hereinafter, with a reception antenna 10R.

The transmission system for transmitting the identification signal sends the aforementioned identification signal established in an identification code memory 13b, upon an instruction from a transmission / reception control timer 13a. The transmission signal of the identification signal is sent from the transmitter 15b after FSK modulation (250 MHz) in a FSK modulating circuit 15a. Numeral 14 and numeral 18 denote a power supply control circuit and a power supply section respectively. Power is supplied to each section of the device by closing the switch 18a, upon a signal from the power supply control circuit 14.

In the reception system for receiving the aforementioned confirmation signal, the following compositional elements are connected after the receiver 11a. Firstly, the received confirmation signal (250 MHz) is FSK demodulated by an FSK demodulating circuit 11b, and is then sent to a matching and adding circuit 11c.

The matching and adding circuit 11c reads out the identification signal previously stored in the identification code memory 13b. It adds up the number of matching points in the respective bits of the identification signal, in order to judge whether or not the received confirmation signal matches the identification signal. The output signal of the addition process (a pulse compression signal, which is described hereinafter), is supplied to a threshold value processing section 11d.

The threshold value processing section 11d compares the output signal from the threshold value processing section 11d with a threshold value previously established in a threshold value setting section 11d'. If the output signal does not exceed the threshold value, a timing signal is output to a signal occurrence judging section 12b.

On the other hand, the confirmation signal received by the receiver 11a is also sent to a signal level detection circuit 12a. A signal representing the signal level detected by this circuit is sent to the signal occurrence judging section 12b. The confirmation signal from the FSK demodulating circuit 11b and the identification code signal from the identification code memory 13b are also input to this signal occurrence judging section 12b.

The signal occurrence judging section 12b judges whether or not the confirmation signal and the identification code signal are matching, and it also judges whether or not the signal level of the confirmation signal received within a prescribed period of time t after reception of a timing signal from the threshold value processing section 11d is equal to or greater than a prescribed value. The signal occurrence judging section 12b does not issue an output signal if both of these two conditions are filled. If the judgment is that it is matching but the signal level is judged to be below the prescribed value, then it issues a warning signal to the warning circuit 16.

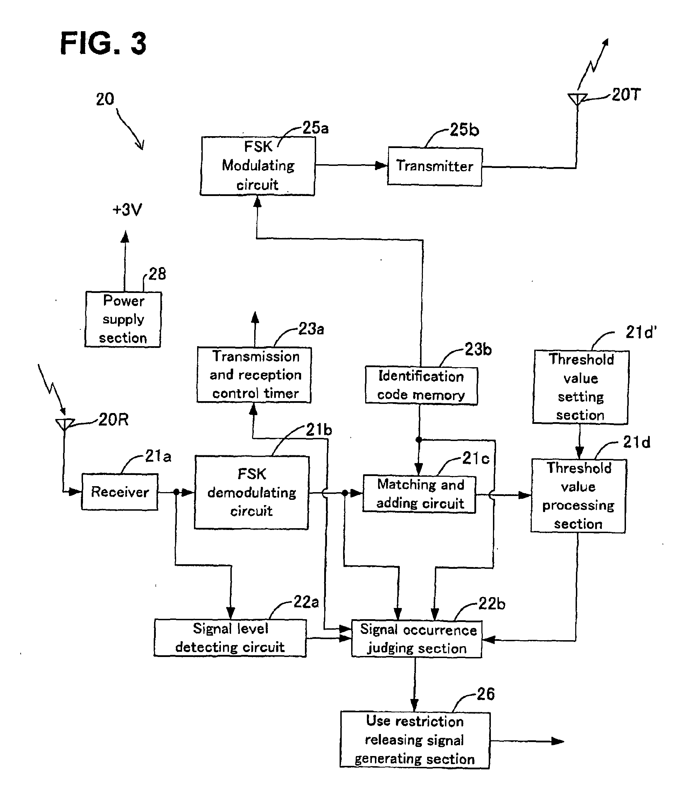

Fig. 3 shows an example of the composition of the releasing device 20. As shown in the diagram, the basic composition of this releasing device 20 is approximately the same as that of the transmitting device 10 in Fig. 2, but it does have some slight differences, in parts, and these differences are described in detail below.

The signal occurrence judging section 22b judges whether or not a signal has occurred, on the basis of the identification signal sent by the transmitting device 10. It does not output any signal, if it is receiving an identification signal. This point is the same as the transmitting device 10. On the other hand, the use restriction releasing signal generating circuit 26 generates a use restriction releasing signal, continuously, unless there is an output signal from the signal occurrence judging section 22b. If the signal occurrence judging section 22b ceases to receive an identification signal, it outputs the signal. In accordance with this output signal, the signal generating section 26 halts the transmission of the releasing signal. These points are different to the transmitting device 10.

Furthermore, the power in the power supply section 28 is supplied continuously to the respective constituent sections, without being controlled by the transmission and reception control timer 23a. Even when it does or does not share the power supply of the portable telephone, the supply of power is not interrupted by the power switch.

This is because, as described hereinafter, it is necessary for the power supply to the releasing device 20 to be switched on at all times, in order that, if an identification signal is transmitted by the transmitting device 10, this transmission is always received by the releasing device 20, whenever it is made, and the releasing device 20 will always be able judge the occurrence of an identification signal on the basis of this signal, and to return a confirmation signal from the transmission system of the releasing device 20, upon instruction by the transmission and reception control timer, within a prescribed time interval. The remaining compositional elements are basically the same as the transmitting device 10 in Fig. 2. These similar elements are labeled with similar reference numerals having the same last digit and 2 instead of 1 as the first digit, and further description thereof is omitted here.

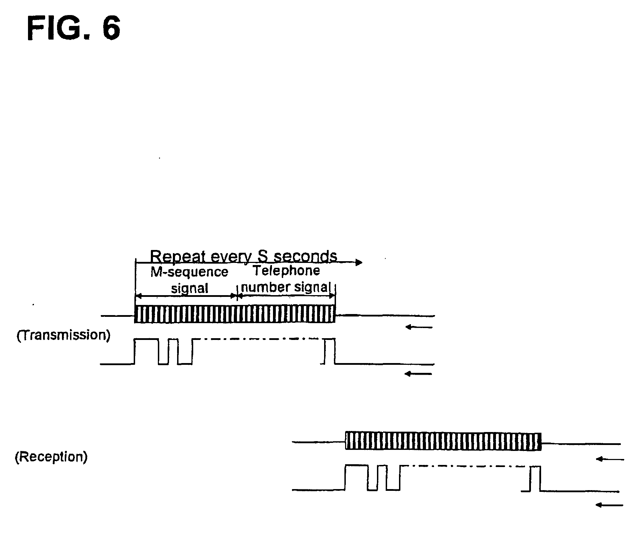

In the description of the various compositional elements described above, the identification signal from the transmitting device 10 is taken to be a signal containing a predetermined unique code signal. As shown in Fig. 6, this identification signal comprises a M-sequence (Maximum length null sequence) signal, and a unique code signal of telephone number of a portable phone which follows the M-sequence (hereinafter, simply called "telephone number"). The M-sequence signal is also included in the identification number, in addition to the telephone number, in order to obtain a signal that is suitable for processing by the particular circuitry for recognizing that the reception signal is a signal from the portable telephone in question, when an identification number is received.

Furthermore, this identification signal comprises the M-sequence signal and the telephone number signal. It is transmitted as an intermittent signal which is repeated at desired time intervals of S seconds (for example, 2000 ms). This is in order to saving power, and means that the signal can be transmitted stably, over a long period of time, without causing wear of the battery. The M-sequence signal may be a C/A code, P code or linear FM signal, or the like. Furthermore, in an appliance other than a portable telephone, the telephone number as the unique code signal may be a signal indicating another ID number, or information relating to the owner, the administrator, or the like.

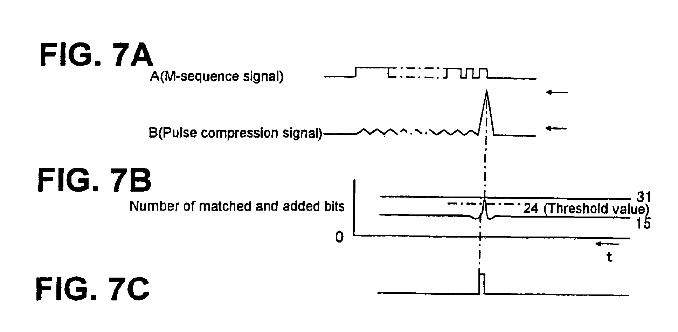

The M-sequence signal is a kind of binary pseudo-random signal, being a code sequence consisting of 1 and 0 values having a length of two to the power of n minus 1, in other words, (2ⁿ - 1), and hence, for example, if n = 5, then it is a 31-bit signal. When this M-sequence signal is sent to the matching and adding circuit 11c, the pulse compression signal illustrated in Fig. 7B is obtained. In this pulse compression, the M-sequence signal of the input signal is compressed to 1/31.

A lot of the aforementioned unique code signals are required for each portable telephone that is sold. Taking the code length to be m bits, then 2^{m} codes are possible. For example, if m is taken to be m = 30, then approximately 1 billion different unique code signals can be obtained. In this embodiment, the unique code signal is taken to be a telephone number, but naturally, it may also be another kind of ID number. If the aforementioned M-sequence signal and the unique code signal are previously stored in an identification code memory, as identification signals, it is possible to prevent unauthorized use in the case of loss or theft, effectively.

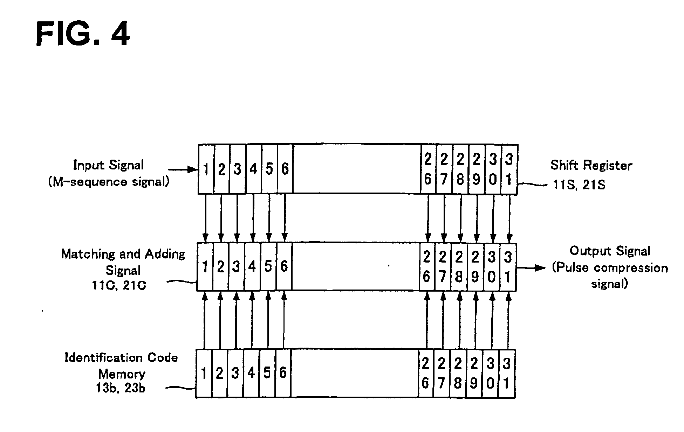

Fig. 4 shows the details of a composition wherein the aforementioned identification signal is transmitted by the transmitting device 10 and received by the releasing device 20, and on the basis of this, the releasing device 20 returns the same signal, as a confirmation signal, after a prescribed period of time, whereupon this signal received by the transmitting device 10 is subjected to pulse compression processing in the matching and adding circuit 11c of the transmitting device 10. When the confirmation signal thus received is demodulated by the FSK demodulating circuit 11b, the M-sequence signal in the header part of that confirmation signal is stored temporarily in a shift register 11s (which is not illustrated in Fig. 3).

The M-sequence signal written to the shift register 11s is transmitted to the matching and adding circuit 11c, whereupon the M-sequence signal of the data previously stored in the identification code memory 13b is called up, and the two M-sequence signals are compared to see if each bit thereof is matching, and the number of matching bits is added up.

The signal resulting from the matching and adding process is output as a pulse compression signal. In this example, the shift register 11s has a 31-bit storage capacity. Since the identification code memory 13b stores both an M-sequence signal (31 bits) and a unique code signal (29 bits), it has a storage capacity of 60 bits. Therefore the data section of the M-sequence signal is called when the two M-sequence signals are processed.

The action of the use restriction device applied to a portable telephone of the present embodiment having the composition described above is now described separately, in terms of the action of the transmitting device 10 and the action of the releasing device 20.

Firstly, if an identification signal is transmitted by the transmitting device 10, and when the power switch (not illustrated) is switched on, the transmission and reception control timer 13a is set, and the switch 18a is closed, by means of the power control circuit 14. Thereby, power is supplied to each portion from the power supply section 18.

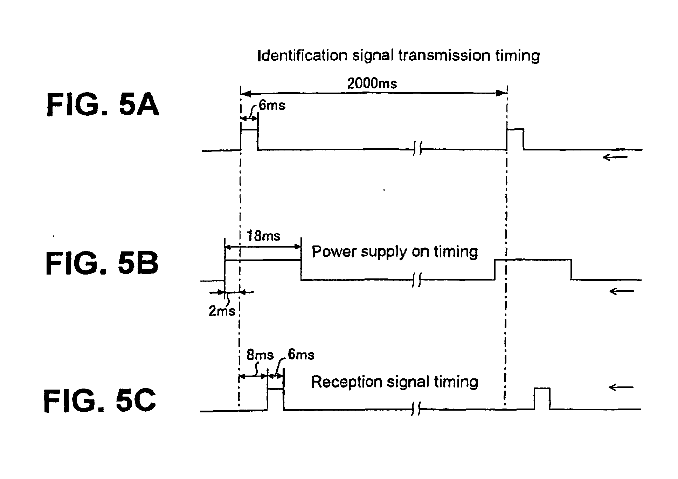

As shown in the time charts (a) and (b) in Fig. 5, when 2 ms has elapsed after the power supply has switched on, the identification signal is read out from the identification code memory 13b, in accordance with an instruction from the control timer 13a, and it is modulated by the FSK modulating circuit 15a, and then transmitted by the transmitter 15b, from the transmission antenna 10T. As described previously, the transmission of the aforementioned identification signal is carried out after FSK modulation of a 31-bit M-sequence signal and a 29-bit unique code signal indicating an unique telephone number, following the M-sequence signal.

If an identification signal transmitted by the transmitting device 10 is received by the releasing device 20 at a prescribed level or above, and if the releasing device 20 identifies the identification signal with the signal of itself, then the releasing device 20 returns a transmission signal that is the same as the aforementioned identification signal, to the transmitting device 10, which receives it as a confirmation signal. The timing of these transmission and reception operations is illustrated in Fig. 5(a) - (c). The power source of the transmitting device 10 is switched on for a total time period of 18 ms comprising start up(2 ms), transmission ( 6 ms), lag time (2 ms), reply(6 ms), and lag time(2 ms).

Subsequently, the transmission timing is controlled by the control timer 13a so that the power supply of the transmitting device 10 is turned on for a prescribed period of time, for example, 2000 ms after the initial power supply has switched on.

Even if the signal transmitted by the transmitting device 10 is received by the receiver 11a of the transmitting device 10, the subsequent processing described hereinafter is not carried out. Therefore, a warning signal is not transmitted to the warning circuit 16 on the basis of this reception signal. As this reception signal does not act as a conventional reception signal, it is distinguished from the confirmation signal sent by the releasing device 20.

It is already described referring Fig.4 that, a confirmation signal sent back by the releasing device 20 at a prescribed timing is subjected to pulse compression in the matching and adding circuit 11c, after it is received by the receiver 11a and is demodulated by the FSK demodulating circuit 11b. In the pulse compression process, the M-sequence signal labeled A in Fig. 7(a) of the confirmation signal is pulse compressed. The value of pulse compression signal vary all the time, since the data of each bit of the signal subjected to matching and adding processing, as indicated by symbol B, is matched partially, to the value of each corresponding bit of the M-sequence signal stored in the identification code memory, both before and after the pulse sequence of the M-sequence signal has been written to the shift register 11s.

However, it is regarded that the two M-sequence are perfectly matched, if a match is established in the matching and adding circuit 11c for all 31 bits in the shift register 13s, and if the pulse compression signal will be 31, after data which matches the M-sequence signal stored in the identification code memory 13b of the device is written to the shift register 11s. It can be regarded that the two M-sequence signals are matched provided that the number of matched and added bits is 24 or above.

The threshold value processing section 11d judges whether or not the pulse compressed signal is equal to or above a threshold value, such as 24, previously established in the threshold value setting section 11d' (see Fig. 7(b). If the threshold value processing section 11d judges that the pulse compressed signal exceeds the threshold value, it outputs a timing signal such as shown in Fig. 7(c), to the signal occurrence judging section 12b.

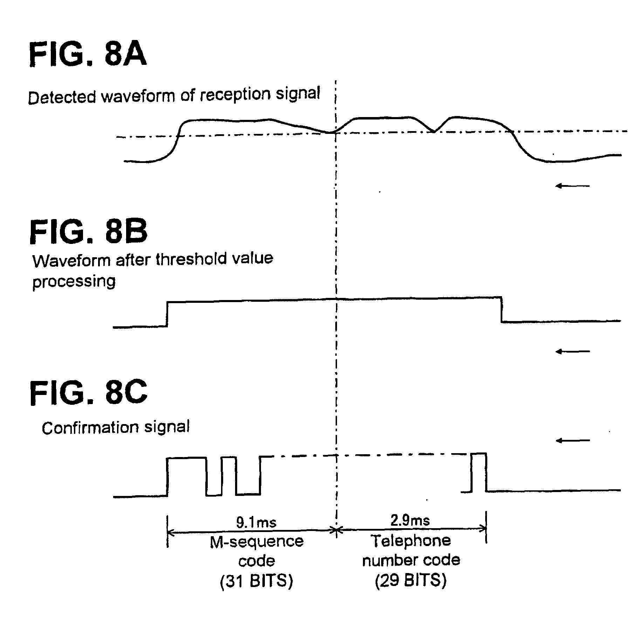

Furthermore, as described above, the signal level detecting circuit 12a detects the signal level of the signal received by the receiver 11a. The signal occurrence judging section 12b judges whether or not this signal level is equal to or more than a prescribed value. This assessment of the signal level is carried out by setting a voltage threshold to the reception signal which has the waveform illustrated in Fig. 8(a). It is judged that a signal of a prescribed level or above has been received, provided that the reception signal is equal to or above the level of this voltage threshold.

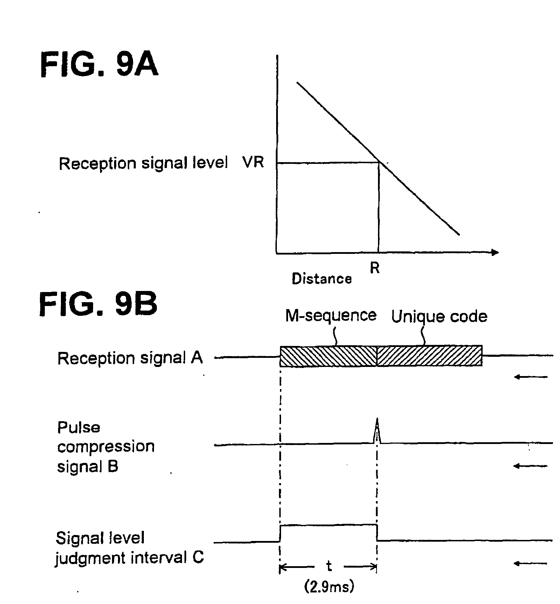

As illustrated in Fig. 9(a), this judgment is based on the fact that, when a signal transmitting at a uniform intensity is received, the level of the reception signal falls in inverse proportion to the square of the distance R between the transmitting device 10 and the releasing device 20. One method for making this judgment is to determine the aforementioned threshold value in accordance with a prescribed distance (for example, one meter). Thereupon, if the level of the received signal falls to or below this threshold value, it is detected that the two parties have become separated by the prescribed distance or more. Fig. 9(a) is depicted using a logarithmic scale. Instead of this judgment method, it is also possible to identify the level of the reception signal by converting the waveform of the reception signal from analogue to digital, and measuring the voltage level of the reception signal.

This judgment of the signal level is only carried out for a prescribed time period t (in the example illustrated, 2.9 ms) corresponding to the unique code signal received after the timing signal issued after threshold processing of the M-sequence signal has been sent by the threshold value processing section 11d. This is in order to prevent detection of noise or signal levels from other telephone devices. The signal level can be judged accurately, by setting the judgment interval to be the prescribed time period identified by the timing signal.

In addition to the judgment of the signal level described above, the judgment process in the signal occurrence judging section 12b involves assessment of whether or not the unique code signal received and FSK modulated after the timing signal has been input matches the unique code signal stored in the identification code memory. Therefore, a timing signal is input to the signal occurrence judging section 12b, and if the signal occurrence judging section 12b receives a reception signal of the prescribed level in a prescribed time period after the reception of the timing signal, and if the unique code signal thus received is judged to match the unique code signal of the appliance to which the system is applied, then this means that the releasing device 20 is located within a prescribed distance of the transmitting device 10. Hence the signal occurrence judging section 12b does not output any signal.

However, even if a timing signal is input and the unique code signal does match that of the appliance to which the system is applied, the signal level is equal to or below the prescribed level, that means the releasing device 20 has been separated by the prescribed distance or more, from the transmitting device 10. Accordingly, in this case, the signal occurrence judging section 12b outputs an output signal so that the warning circuit 16 is activated.

The warning circuit 16 causes a voice generator (not illustrated) to generate a voice message, such as "do not leave me alone", or the like, for example. By issuing a warning of this kind to the owner, or other user, if the owner, or other user, has the transmitting device 10 inserted in his or her pocket, he or she will be able to tell that the releasing device 20 has been separated from his or her possession, due to loss, theft, or the like.

In addition to a method which issues a voice message as described above, the warning issued by the warning circuit 16 may also be in the form of a beep, or a warning sound with a message "do not leave me alone" which is displayed on the display section. Furthermore, even if a signal other than a confirmation signal of the identification code signal of the appliance to which the system is applied is received, the signal occurrence judging section 12b does not output an output signal, since all or some of the three conditions described above are not established. Hence, needless to say, this does not affect the receiving operation of the transmitting device in any way.

Next, the action of the releasing device 20 will be described. As described above, in this device 20, power is supplied constantly to the respective constituent from the power supply section 28, irrespectively of whether the power of the portable telephone 30 is on or off. Therefore, whenever an identification signal is transmitted by the transmitting device 10, this is received almost simultaneously by the receiver 21a of the releasing device 20.

This process is the same in that the identification signal thus received is demodulated by the FSK demodulator circuit 21b, sent to the matching and adding circuit 21c, and a timing signal based on the M-sequence signal is sent to the signal occurrence judging section 22b by the threshold value processing section 21d. Moreover, similarly to the foregoing, the signal level of the received signal is detected by a signal level detecting circuit 22a, and it is judged whether or not the signal level is equal to or above a prescribed level, during a prescribed judgment time period t after the arrival of the timing signal sent by the signal occurrence judging section 22b.

Furthermore, similarly to the case of the transmitting device 10, during the judgment time period, the signal occurrence judging section 22b judges whether or not the signal thus transmitted matches the unique code signal stored previously in the identification code memory 23b. However, in the case of the releasing device 20, the signal occurrence judging section 22b does not output any signal, if three conditions are established, namely, if the aforementioned timing signal is received, if the signal level is equal to or greater than a prescribed value in both judgment operations, and if the unique code signals are matching.

If there is no output signal, then it is supposed that the releasing device 20, and therefore, the portable telephone 30, are both in the possession of the owner or user, and are not distanced from the transmitter device. Hence a use restriction releasing signal is output constantly by the use restriction releasing signal generating section 26. Therefore the portable telephone 30 is left in a usable state at all times.

When a prescribed time period (in this example, 2 ms) has elapsed in the signal occurrence judgment processing performed by the signal occurrence judging section 22b after the identification signal has been received, the transmission and reception control timer 23a is set by a signal from the signal occurrence judging section 22b, and a signal exactly the same as the received identification signal is read out from the identification code memory 23b and transmitted via the FSK modulating circuit 25a and the transmitter 25b. As described above, this signal is received as a confirmation signal by the transmitting device 10.

However, if the releasing device 20, together with the portable telephone 30, becomes separated by a prescribed distance or more from the transmitting device 10, due to loss, theft, or the like, the signal level will fall below the prescribed value in the signal level detection process described above, and hence the signal occurrence judging section 22b will judge that an identification signal is not being received. When this judgment is made, an output signal is output from the signal occurrence judging section 22b, the output of the use releasing signal from the releasing signal generating section 26 is halted, and consequently, the portable telephone 30 becomes unusable.

As described above, the use restriction device according to this embodiment involves a transmitter device 10 that is inserted into the owner's or user's pocket, or the like, and a releasing device 20 which is incorporated into the portable telephone 30 belonging to the owner or user. Consequently, if the releasing device 20, together with the portable telephone 30, is separated by a prescribed distance or more from the transmitting device 10, the use of the portable telephone 30 is restricted, and hence illegal or unauthorized use, or the like, can be prevented. Furthermore, since a audio warning, or the like, is issued to the owner or user, by the transmitting device 10, then the owner or user can notice immediately that the portable telephone 30 has become separated from him or her.

In the present embodiment, an identification signal is transmitted initially by the signal transmitting device 10, and when this signal is received by the releasing device 20, it returns a confirmation signal, which is received by the signal transmitting device 10. It is also possible to start the transmission of the identification signal from the releasing device 20, conversely to the embodiment described above. In this case, if a confirmation signal corresponding to the identification signal transmitted by the releasing device 20 is sent back by the signal transmitting device 10, it is taken that the releasing device 20 is located within a prescribed distance from the signal transmitting device 10, due to the reception of this confirmation signal.

Furthermore, it is also possible to adopt the same process for starting the identification signal as that in the aforementioned embodiment, but rather than providing a battery as the power source for the signal transmitting device 10, power supply radio waves are sent from the appliance to which the system is applied, such as the portable telephone, to the signal transmitting device 10, by microwave radiation, and when the power of this electromagnetic radiation is equal to or above a prescribed value, then the transmission of the identification signal is started. In this case, the signal transmitting device 10 may be constituted by an ultra-thin device, such as a non-contact card.

Furthermore, the foregoing embodiment is based principally on the hypothetical loss or theft of a portable telephone, but the use restriction function may be applied to any one of a variety of appliances, such as a personal computer or a word processor, wherein use is restricted in order to prevent the extraction of information displayed on the screen thereof, by another person, or to restrict the use of a car door, the lock of a safe, or the like, or various types of game machine. These types of appliances require use restriction in order to prevent illegal use, unauthorized use, or theft of an automobile rather than misplacement.

In the present embodiment, a warning is only output by the signal transmitting device 10. However, if the use restriction function is provided in one of the various types of appliances described above, it may also be necessary to issue a warning from both the signal transmitting device 10 and the releasing device 20, depending on the nature of the appliance to which the system is applied. Therefore, in this case, respective warnings are issued by the respective devices, on the basis of a detection signal indicating the fact that the level of the reception signal has fallen to or below a prescribed intensity.

Separately from issuing a warning on the basis of the aforementioned detection signal, it is also possible to provide warning buttons on either one or both of the devices, so that, even if the distance between two devices is within a prescribed value and there is no requirement to issue a warning, a warning can still be generated if a signal for issuing a warning is received from the other device. Although this warning is principally a audio warning, for example, a beep or buzzer, or the like, it is also possible to use a visual warning, for example, a red lamp, an LED display, and so on. In addition to radio waves, the signal of transmitting may also be ultrasonic waves, visible lights, infrared rays, and the like.

In the foregoing embodiment, an example was described wherein a use restriction releasing signal is employed. It is also possible to employ a use restricting signal. If a use restricting signal is adopted, the combination of a signal transmitting device 10 and a use restricting device 20 is used. Although signal transmitting device 10 has the same composition and functions as that of the first embodiment and the modifications thereof, the processing sequence after the reception of a code signal from the signal transmitting device 10 is opposite to that in the first embodiment and the modifications thereof in the use restricting device 20 (detailed illustration thereof is omitted).

In other words, when a code signal is received from the signal transmitting device 10 within a prescribed distance range, the use restricting device 20 halts the transmission of a use restricting signal to the appliance to which the system is applied, so that the appliance can be used freely without any use restriction. Furthermore, if the intensity of the code signal from the signal transmitting device 10 falls to or below a prescribed level, due to its moving outside of the prescribed distance range, then the use restricting device 20 transmits a use restricting signal to the appliance to which the system is applied, in order that the appliance is in an unusable state.

It is same as in the first embodiment and the modifications that, the code signal sent to the use restriction device can start from both the signal transmission device 10 and the use restriction device 20. A warning signal must be generated in the use restricting device 20 or in both devices. The generation of a warning signal in the use restricting device 20 is suitable for preventing extraction of information from a computer, or preventing unauthorized opening of an automobile door, for example.

This is because the extraction of information from a computer or the unauthorized opening of an automobile door involve different cases from the loss or theft of a portable telephone, and are cases in which the priority is to generate a warning in the appliance to which the system is applied, in order to alert related persons or general persons in the vicinity of the appliance that is illegally used or used without any authorization. Consequently, it is of course also possible to cause a warning to be generated by both devices.

With regard to preventing the extraction of information from the personal computer as described above, besides a case where the use of a personal computer is to be restricted, it is also possible to apply use restriction to preventing infiltration via a local area network (LAN) cable. Personal computers are often connected to a LAN cable. A repeater can be inserted in to the LAN cable, in order to prevent infiltration via the LAN by shutting off the power. Consequently, in this case, the appliance to which the system is applied is the repeater device.

Furthermore, with regard to unauthorized opening of an automobile door, use restriction can be implemented in the following manner. The use restricting device 20 is incorporated into the automatic door locking device. The use restricting signal is halted whenever the signal transmitting device 10 is located with a prescribed distance range. Once the doors have been shut and locked, within this range, if the signal transmitter device 20 moves outside this prescribed distance range, then the lights flash as a warning indicating that the doors are locked. The tail lights or direction indicator lights of the vehicle can be used as these lights.

As described in detail above, the use restricting device according to a first embodiment comprises a signal transmitting device and a use restriction releasing device provided in the appliance subject to use restriction. The signal transmitting device 10 carried in user's pocket, or the like, restricts the use of the appliance. A warning is also issued by the transmitting device 10. If the two devices become separated by a prescribed distance or more, the unauthorized use is prevented by the use restriction. At the same time, the user can notice the separation. A remarkable effect of swift countermeasures can be obtained.

Moreover, the same beneficial effect as provided by a use restricting device based on a use restriction releasing signal are obtained by the inverse action with the use restriction signal.

### (Second embodiment)

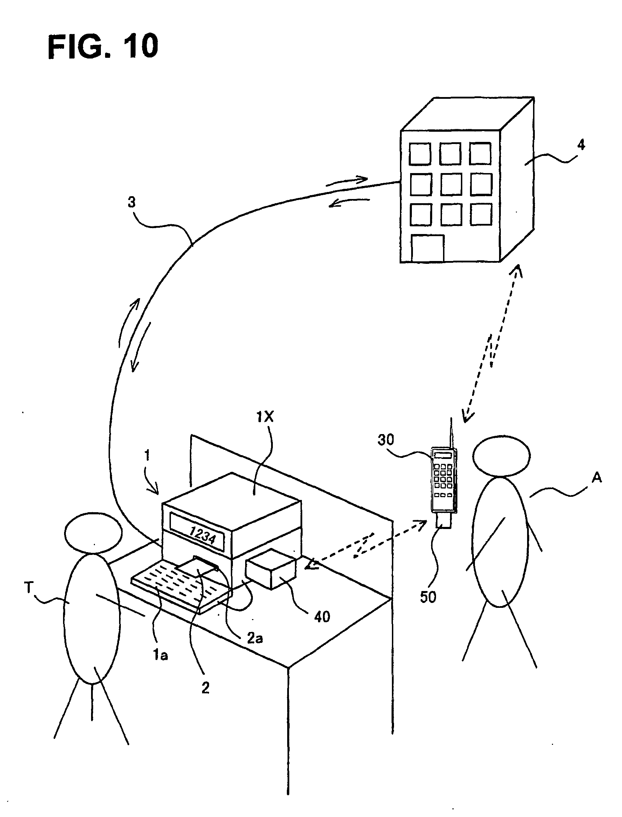

Below, a second embodiment of the present invention is described with reference to the drawings. Fig. 10 is a conceptual diagram showing a schematic view of the general composition of a wireless authentication system according to a second embodiment. This wireless authentication system is a authentication system for a credit card, which can enhance the security of the payment through credit cards. It is possible to prevent incidents, such as theft, or falsification of credit cards, in advance by this.

This wireless authentication system comprises a card information processing device which include a card reader, a host computer of an authentication center 4 connected to the card information processing device via a transmission path cable 3, an optional authentication device 40 appended to the processing device 1, and an authentication device 50 assembled in such a manner that it can transmit and receive wireless ID signals, to and from the optional authentication device 40. The authentication device 50 is installed on or built into a portable telephone 30. In this wireless authentication system, multiple authentication is carried out on a plurality of levels.

In practice, a plurality of card information processing devices 1 are connected to the authentication center 4, but for the sake of simplicity, only one is illustrated.

As in the prior art, the card information processing device 1 is located at the salesroom of a system subscriber, such as a shop, department store, or the like, which accepts payment of bills by means of this wireless authentication system. Although the authentication center 4 has a basic authentication and settlement function as in prior art, the overall processing functions are significantly different, as described hereinafter. The optional authentication device 40 may be of a format that is installed externally on the processing device 1, or it may be installed in the processing device 1 in an integral fashion. The authentication device 50 may also be installed externally on the portable telephone 30, or incorporated into same in an integral fashion.

The wireless authentication system reads in card information from a credit card 2 inserted into the card reader of the processing device 1, and transmits this card information to the authentication server 4, via the transmission path cable 3, whereupon authentication is carried out (level 1) by confirming whether or not this card information is the authorized cardholder's. After this authentication, the plurality of levels of authentication described below are also carried out. The payment is settled by means of the credit card 2, by transmitting the payment data input to the processing device 1, to the authentication server 4.

The plurality of levels of authentication are as described below. If level 1 authentication is carried out in the authentication server 4, a wireless ID signal is returned to the processing device 1 by the authentication server 4. When the processing device 1 receives this wireless ID signal, the wireless ID signal is then sent to the authentication device 50, by the attached optional authentication device 40, in the form of a radio signal. When this signal is received by the authentication device 50 which is held by the cardholder owning the credit card 2, the device 50 confirms that the wireless ID signal is matching. After this confirmation has been carried out, it sends the wireless ID signal back to the optional authentication device 40. The optional authentication device 40 authenticates the ID signal by receiving the wireless ID signal (level 2).

Furthermore, this wireless ID signal is also sent via the processing device 1 to the authentication server 4. Authentication is performed again by confirming that the wireless ID signal is matching (level 3).

After the level 3 authentication has been carried out, the wireless ID signal is again sent back by the authentication server 4, via the processing device 1 and the optional authentication device 40, to the authentication device 50. Triggered by this signal, an automatic call is issued from the portable telephone 30 to the authentication server 4. The authentication server 4 performs authentication by confirming that the telephone number of the automatic call from the portable telephone 30 is that of the cardholder (level 4).

On the basis of this level 4 authentication, a final authentication completed signal is sent by the authentication server 4 to the processing device 1. When this is displayed on the display device of the processing device 1, payment is accepted. The foregoing relates to the approximate composition and operation of a wireless authentication system, and below, this is described in further detail.

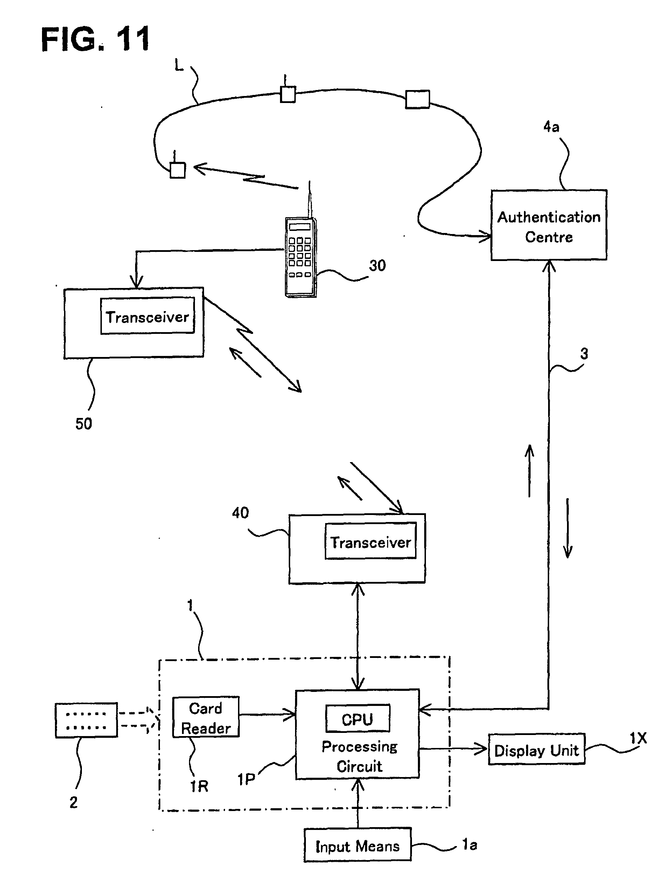

Fig. 11 is a block diagram of the wireless authentication system described above. As shown in the diagram, the card information processing device 1 comprises a card reader 1R which reads in card information from a credit card 2, and a circuit 1P which controls transmission and reception in such a manner that the card information is transmitted to the host computer 4a of the authentication server 4, a signal is transmitted from the host computer 4a to the optional authentication device 40, when such a signal is received, a signal is transmitted from the optional authentication device 40 to the host computer 4a, and the required information is displayed on the display device 1x. Input mean of 1a is constituted by a keyboard for inputting data, such as the amount to pay, and additional information.

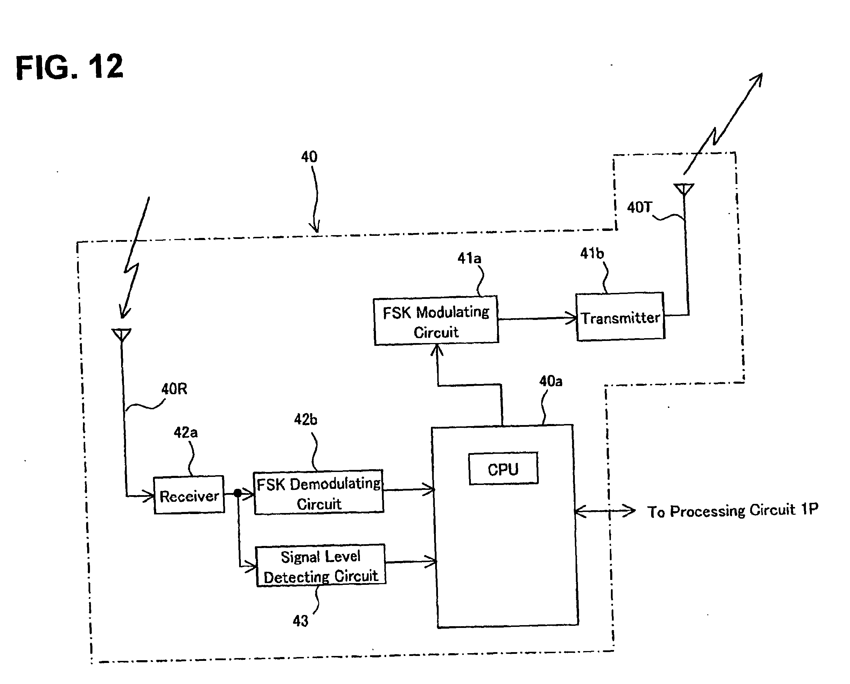

The card reader 1R is constituted by magnetic or optical reading means whereby magnetic data or display data stored on a credit card 2 can be read in. The data thus read in is converted into a digital signal and transmitted to the processing circuit 1P. The input mean 1a is used to input data of the payment amount, when the authentication of the credit card has been confirmed. Fig. 12 and Fig. 12 shows approximate block diagrams of the optional authentication device 40 and the authentication device 50.

The optional authentication device 40 shown in Fig. 12 comprises a computing section 40a constituted by a microcomputer, a transmitting system for transmitting a wireless ID signal to the authentication device 50 when such a wireless ID signal is received by the computing section from the processing circuit 1P, and a receiving system for receiving a wireless ID signal transmitted by the authentication device 50.

The transmitting system modulates the wireless ID signal by mounting it on a carrier wave with a FSK modulating circuit 41a, and transmits the signal from a transmitter 41b by means of a transmission antenna 40T. The receiving system receives a wireless ID signal sent back by the authentication device 50, via a reception antenna 40R, in a receiver 42a, and then demodulates the signal in a FSK demodulating circuit 42b and sends it to the computing section 40a. The signal level of the reception signal is checked by a signal level detecting circuit 43, so that it can be confirmed that the authentication device 50 is located within a prescribed distance.

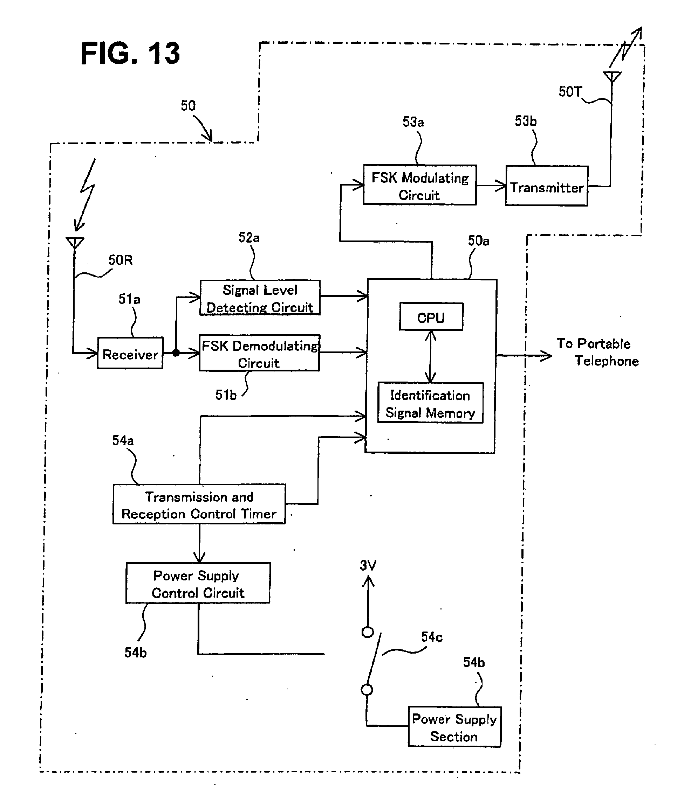

The authentication device 50 shown in Fig. 13 also comprises a computing section 50a of a microcomputer, similarly to the optional authentication device 40. This computing section 50a contains a match judging section (authentication program), authentication code memory, and the like, which are previously programmed into the fixed storage region (ROM) thereof. When a wireless ID signal is transmitted by the optional authentication device 40, this authentication device 50 receives the signal at the receiver 51a, by means of the reception antenna 50R of the receiving system. The signal is then demodulated in the FSK demodulating circuit 51b and supplied to the computing section 50a, where it is assessed by the judging section to see if it matches the identification signal previously stored in the identification signal memory of the computing section 50a.

If, as a result of the judgment operation by the judging section, the wireless ID signal matches the stored identification signal, then in accordance with this matching signal, the wireless ID signal is output by the computing section 50a. After modulated in the FSK modulating circuit 53a, it is transmitted from the transmitter 53b via the transmission antenna 50T, so that it returns to the optional authentication device 40. Numeral 54a in the diagram indicates a transmission and reception control timer, 54b denotes a power supply control circuit, and 54d denotes a power supply section (battery). The switch 54c is closed by means of a signal from the power supply control circuit 54b, whereby power is supplied to the respective parts of the device. The various transmission and reception operations. are controlled by the control timer 24a.

The authentication device 50 is small, so that it is easy to carry. The composition described above is a device having a built-in battery, but it is also possible to dispense with the battery power supply, such as a non-contact card, wherein a power is generated by receiving electromagnetic waves transmitted initially by the authentication device 40, in a resonance circuit. Two-way communications are then carried out on the basis of this power supply.

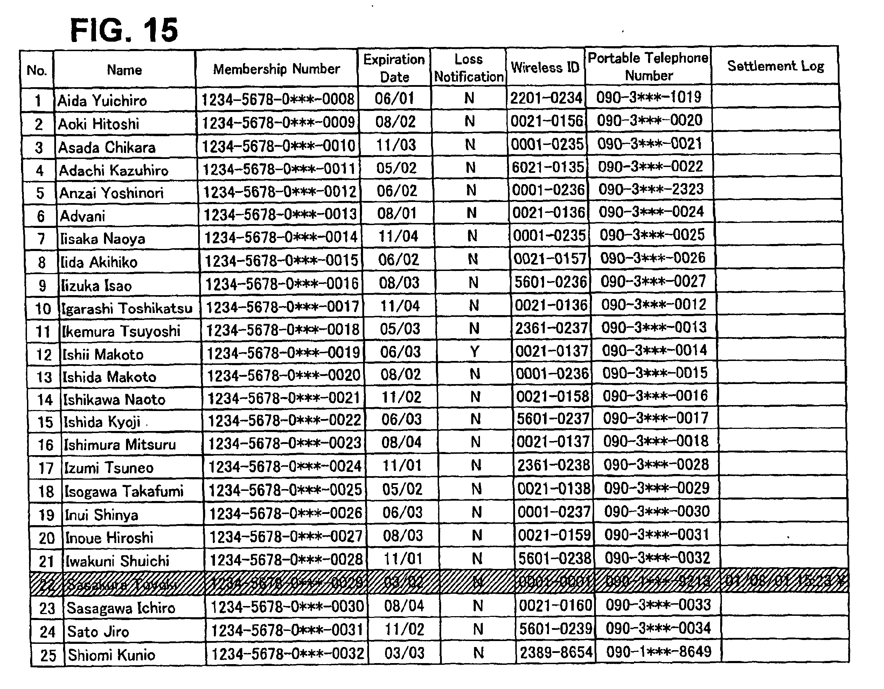

The host computer 4a of the authentication server 4 controls the transmission and reception of various signals, by means of a main computing section, and in a storing section thereof, it stores cardholder registration data in the form of a cardholder management table as illustrated in Fig. 15, in such a manner that when it receives transmitted card information or a wireless ID signal, it can determine whether or not this matches the data for that cardholder, by means of a program in a judging section, as well as returning signals resulting from authentication judgments at the respective authentication levels, to the card information processing device 1, and executing payment processing. As shown in the diagram, the cardholder management table includes information such as a name, a cardholder number, an expiration date, a loss notification, a wireless ID signal, a portable telephone number, and a settlement log, for example.

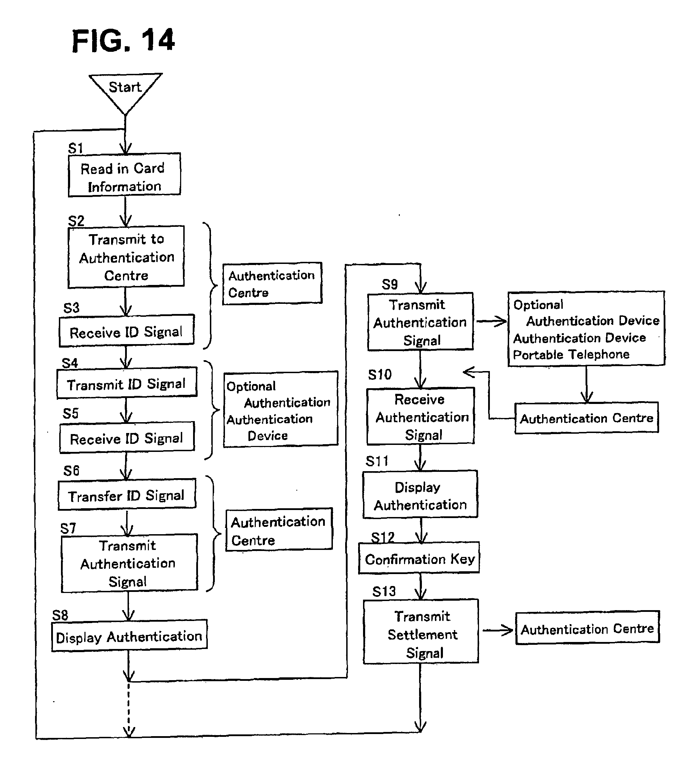

In the wireless authentication system having the composition described above, credit card authentication is carried out as described below. If the authentication is entirely correct, then normal settlement processing is carried out. The subsequent authentication tasks are described with reference to the flowchart in Fig. 14. The flowchart in Fig. 14 shows the operation of the card information processing device 1 which is the central element in the processing operations. The operations required of the optional authentication device 40 and the authentication device 50 are described partially, as related operations.

The credit card 2 is carried by a cardholders having an authentication device 50 and a portable telephone 30. It is supposed that this cardholder has submitted his credit card 2 to a store subscribing to the system, in order to pay a bill. When the card 2 is submitted, at step S1, the card information is read in by the card reader 1R. The card information thus read in is then sent to the processing circuit 1P, and by means of a transmission command, at step S2. It is sent to the host computer 4a in the authentication center 4.

The card information read in by the card reader 1R is data indicating the card number (cardholder number), expiration date, name, and the like. It may be in the following format, for example.

1234-5678-0xxx-0029 03/02, Sasakura Toyoki, etc.

The card information may be transmitted via a commercial (public) telephone line, or via a radio telephone line (DoPa, or the like).

The card information transmitted to the authentication center 4 is compared with registered information previously registered for the cardholder in the host computer 4a of the authentication center 4, so that authentication is carried out in order to check whether or not the credit card is authorized (level 1). The cardholder management table used in this authentication process is expressed in terms of the items and symbols shown in Fig. 15, for example. In this authentication step, firstly, it is checked that the name and the cardholder number are matching, and the expiry date and occurrence of a loss notification (Y, N) are also investigated.

If all of the data is matching, then it is confirmed that the card is valid, and hence the processing at authentication level 1 is completed. When this processing has completed, the wireless ID signal assigned to the cardholder and stored previously in the management table (for example, 0001 - 0001) is read out from a file. The wireless ID signal thus read out is encrypted (scrambled), and sent back to the card information processing device 1 of the corresponding affiliated store, from the authentication center 4, together with a notice indicating the completion of authentication level 1.

If the card information is not matching, then a non-matching signal is returned. The completion report and wireless ID signal are not transmitted. The subsequent authentication processing is not carried out.

When the aforementioned processing is carried out in the authentication center 4 and the wireless ID signal returned by same is received by the information processing device 1 at step S3, then in step S4, upon a command from the processing circuit 1P, this wireless ID signal is transmitted to the optional authentication device 40. The wireless ID signal is then transmitted to the authentication device 50, upon a command from the computing section 40a of the optional authentication device 40. In this case, it is a prerequisite that the registered cardholder is carrying the authentication device 50 together with a portable telephone 30. The signal from the optional authentication device 40 is received by the authentication device 50, at a constant frequency, while the power supply is switched on.

The wireless ID signal received by the authentication device 50 is decrypted and judged by a judging section to see whether or not it matches the signal stored in the identification signal memory. If, as a result of this judgment step, the two signals are matching, then that signal is confirmed. In accordance with this confirmation signal, the authentication device 50 sends its own wireless ID signal back to the optional authentication device 40.

When the optional authentication device 40 receives the ID signal at step S5, it is confirmed that this wireless ID signal is correct (level 2). This ID signal is then transmitted to the processing circuit 1P, where it is encrypted once again. At step S6, it is transferred from the processing circuit 1P to the authentication center 4.

If, as a result of the ID signal check in the authentication device 50, the ID signal does not match the signal in the identification memory, then the authentication device 50 does not transmit the signal. If the optional authentication device 40 does not receive a signal within a prescribed time period, then it assumes that the authentication device 50 is not located within a prescribed distance (is not being carried by the cardholder), or that the authentication device 50 is not the authorized one, and hence it halts all subsequent authentication processing.

If the authentication center 4 receives the wireless ID signal as described above, then it carries out authentication (level 3) by again comparing the received wireless ID signal with the registration data in the cardholder management table in which the wireless ID signal of the authentication device 50 is registered, to see if the information is matching.

If it is matching, then the authentication center 4 transmits the authentication results to the processing device 1 at step S7, and at step S8 the processing device 1 displays the authentication result on the display unit 1x. If the information is not matching, then the authentication center 4 transmits a signal (NO) to the processing device 1, which displays this message and halts subsequent authentication processing.

If the authentication is confirmed, this matching signal is transmitted by the processing device 1 to the optional authentication device 40 and the authentication device 50, at step S9. When the authentication device 50 receives this signal, it automatically connects to the portable telephone 30 carried by the cardholder.

The portable telephone 30 automatically issues a call and connects to the authentication center 4. In this case, for example, assuming that the telephone number of the authentication center 4 is 0120-1xx-2xx and the telephone number of the portable telephone is 090-1xx-9213, an automatic call is made to the authentication center 4, by means of the telephone number of the authentication center 4 previously stored in the portable telephone 30. The authentication center 4 registers the number of the portable telephone which is calling it by means of an automatic call. The authentication center 4 then performs authentication to check whether or not this portable telephone number matches the corresponding telephone number in the cardholder management table registered in the authentication center 4 (level 4).

If the telephone numbers are matching and authentication is confirmed, then the authentication center 4 sends this comparison result to the processing device 1. At step S10, after the processing device 1 receives a matched signal as a result of the aforementioned comparison process, it display this result on the display unit 1x. At step S12, the operator (shop assistant, or the like), presses a confirmation key, whereupon the processing system 1 confirms authentication has been fully completed. At step S13, this confirmation signal is transmitted to the authentication center 4. At the same time, the data relating to the payment amount input by the operator via the input mean 1a is transmitted from the processing circuit 1P to the authentication center 4. After that, the authentication center 4 refers to the aforementioned confirmation signal, and then carries out settlement processing.

By means of the foregoing sequence, multiple-level authentication of a cardholder is carried out, followed by settlement processing, and processing of this kind is subsequently carried out with respect to the credit cards 2 of other cardholders, as and when necessary. The foregoing multiple-level authentication tasks were described assuming that authentication is carried out up to level 4, but the authentication level may be set as desired. Provided that the level is at least higher than the conventional authentication level of level 1, security as countermeasures against card theft, falsification, and the like, is improved.

Consequently, if the system is devised to effect payment at authentication level 2, then only the optional authentication device 40 and the authentication device 50 need to be provided, and the authentication procedure can be completed at the authentication process (level 2) in the authentication device 50, without involving a portable telephone 30.

In this case, the authentication device 50 is formed as an independent device, separately from the portable telephone 30, and this device is carried by the cardholder. Furthermore, the respective processing programs in the authentication center 4 and the processing device 1 should be the programs required to process level 2 authentication.

If the system is devised to effect payment at authentication level 3, then similarly to the case of level 2, an optional authentication device 40 and an authentication device 50 are provided, but the portable telephone 30 is not used. The authentication center 4 should be provided with a program whereby level 3 authentication can be executed in the authentication center 4, after the level 2 authentication carried out in authentication device 50.

In the second embodiment described above, if authentication is performed up to level 4, then it is supposed that the level 4 is carried out after the authentication up to level 3 has been completed. But it is also possible to carry out the authentication up to level 3 and the authentication in level 4 in a parallel fashion, in such a manner that either of these authentication procedures may finish first. Moreover, the wireless authentication system according to the second embodiment requires authentication up to level 4, in principle, but if, for example, the cardholder has forgotten to bring the authentication device 50, then it is possible to apply the settlement processing in a flexible manner, provided that at least the authentication by means of the portable telephone 30 is carried out.

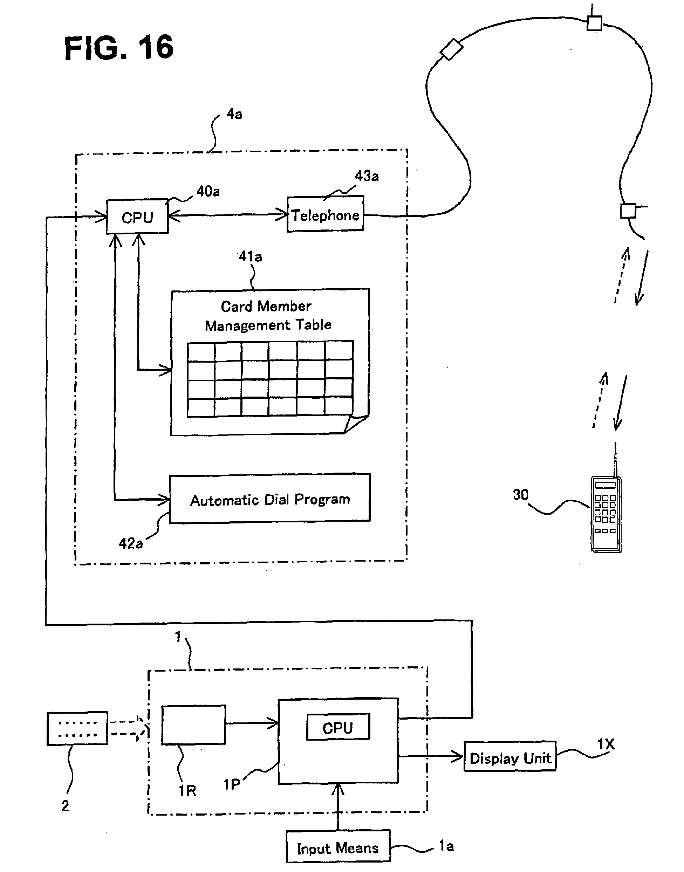

In the respective embodiments described above, an example was described relating to multiple-level authentication based on two-way communications between an optional authentication device 40 and a authentication device 50. But the multiple-level authentication may also be based on one-way communications, rather than the two-way communications described above. As an example of such alternative methods, a wireless authentication system according to an embodiment as shown in Fig. 16 may be used. In this system, the optional authentication device 40 and the authentication device 50 are omitted, and the portable telephone 30 is fitted onto the card information processing device 1.

In this case, the host computer 4a of the authentication center 4 comprises basic functions whereby the basic authentication on the basis of the card information is carried out by the main computing section 40a, similarly to the respective embodiments described above, and this card information is compared with the various data in the cardholder management table in the storing section 41a, in accordance with a control program, which is not illustrated. But separately from this, the main computing section 40a is connected to a telephone 43a, which issues an automatic call in accordance with an automatic dialing program of the control program 42a, and connects to the portable telephone 30, by means of a public line or a radio line.

In the wireless authentication system having this composition, similarly to the various embodiments described above, basic authentication is carried out whereby the card information is read out from the credit card 2, the card information thus read out is transmitted by the card information processing device 1 to the authentication center 4, and this information is authenticated by comparing it with the data in the cardholder management table. In this system, if this basic authentication has been carried out and the card information has been authenticated to be correct, then the automatically dialing program is activated, and an automatic call is made to the portable telephone 30 of the cardholder. Since this telephone number is previously registered in the cardholder management table, the number of the corresponding portable telephone is read out on the basis of the card information, and the automatic call is made to that telephone number.

Consequently, if the portable telephone 30 to which the automatic call is made is set to reception mode, then the telephone number of the authentication center 4 (for example, 03-1234-xxxx) will be displayed on the display unit thereof, whereupon the cardholder will show this display to the salesclerk, thereby confirming his or her identity, and hence completing authentication (level 2). In this case, a signal indicating that basic authentication has been made is returned from the authentication center 4 to the processing device 1, whereupon, when the display of an incoming call from the authentication center is confirmed on the display unit of the portable telephone, a confirmation signal is input to the processing device 1, via the input means 1a (such as a confirmation button), and multiple-level (double) authentication is completed.

When this multiple-level authentication has been completed, this completion is indicated on the display unit 1x. When the salesclerk confirms the display of this completion message, then he or she enters the payment amount data, via the input means 1a. If the amount displayed is correct, he or she then presses the confirmation key again. The payment amount data is transmitted from the processing device 1 to the authentication center 4. Upon receiving these signals, the authentication center 4 carried out settlement processing, leaves a record in the payment log, and then terminates settlement processing.

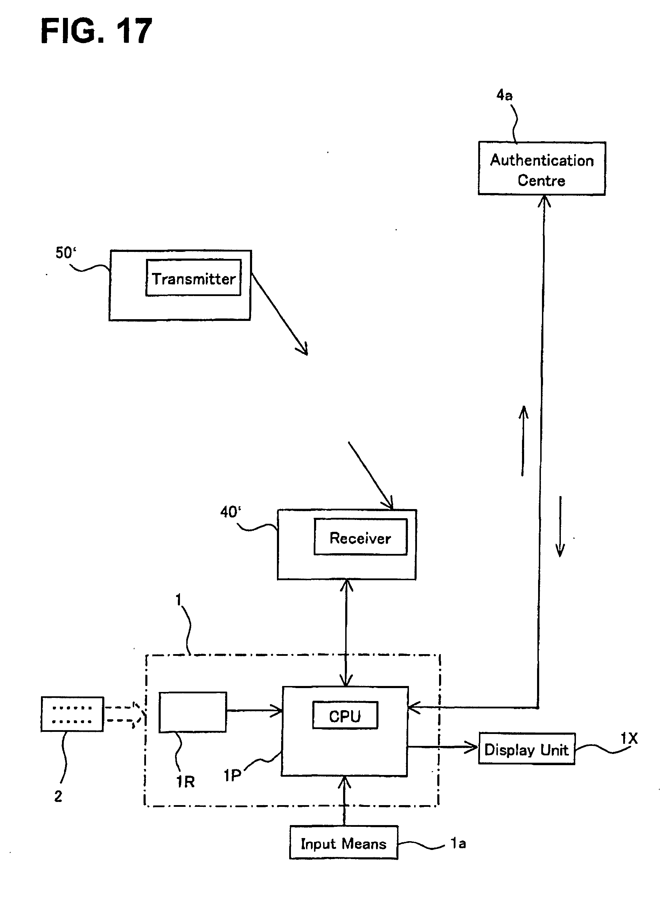

Next, Fig. 17 shows a further embodiment of a wireless authentication system based on one-way communications. This embodiment relates to an example in which no portable telephone 30 is used, and an optional authentication device 40' and an authentication device 50' are incorporated into the processing device 1.

The authentication device 50' has functions for outputting a wireless ID signal, which is a unique identification signal stored in the identification memory, via a transmitter. The optional authentication device 40' has functions for receives a wireless ID signal, via a receiver, and transmitting same to a processing device 1. Furthermore, the host computer 4a of the authentication center has the basic authentication functions described in the other embodiments above, and a function for authenticating the wireless ID signal.

In this embodiment, in parallel with carrying out basic authentication by reading out the card information from the credit card 2, provided that the authentication device 50' is located within a prescribed distance range of the processing device 1, the authentication device 50' issues a wireless ID signal at uniform time intervals so that this wireless ID signal is received by the receiver of the optional authentication device 40'. The ID signal is sent to the authentication center 4, via the processing device 1. By comparing it with the data in the cardholder management table, multiple-level authentication is carried out (level 2). It is possible to carry out either the basic authentication or the multiple-level authentication first. The processing until payment settlement processing after the multiple-level authentication is similar to the embodiment illustrated in Fig. 16.

The embodiments illustrated in Fig. 16 and Fig. 17 relate to wireless authentication systems which perform multiple-level authentication by means of one-way communications. It is also possible to increase the authentication levels of the multiple-level authentication by combining the foregoing two embodiments. In this case, a portable telephone 30, an optional authentication device 40' and an authentication device 50' are provided, respectively, and multiple-level authentication (level 3) is carried out by combining authentication by means of the portable telephone 30, and authentication by means of the optional authentication device 40' and the authentication device 50'. The authentication by means of the portable telephone 30 and the authentication by means of the optional authentication device 40' may be carried out in parallel, or either one of these authentication processes may be carried out first.

As described in detail above, the wireless authentication system according to this invention comprises a card information processing device which processes and transmits card information and payment amount data, an authentication settlement device for performing authentication by confirming that the card information, and the like, corresponds to that of a registered cardholder, and settling payment, and multiple-level authentication means for performing multiple-level authentication by means of two-way communications or one-way communications, in such a manner that settlement processing is carried out when the final authentication has been completed by the multiple-level authenticating means. Thereby, even if a card is used illegally, due to the card having been stolen or falsified, by means of the multiple-level authentication, the illegal use can be detected without fail, and therefore merits are obtained in that the occurrence of large financial losses can be prevented, and high security can be ensured.

### (Third embodiment)

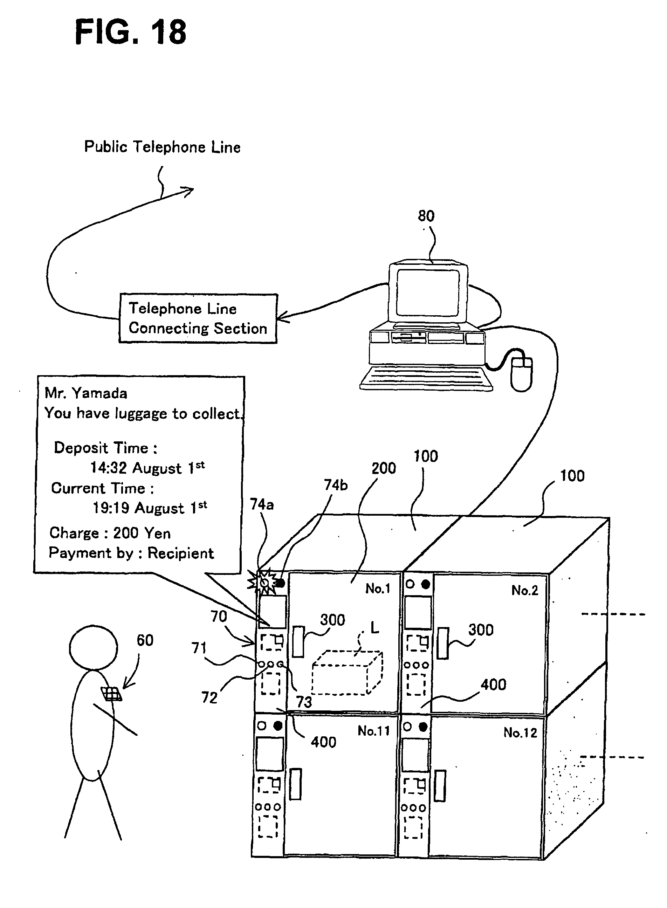

Below, a third embodiment of the present invention is described with reference to the drawings. Fig. 18 is an external view of a wireless authentication system according to this third embodiment.

The locker 100 is a new locker that is installed instead of, or in an equivalent position to, a coin-operated locker situated in a prescribed location, such as a railway station, department store entrance, or the like, for example. This locker 100 can be used by a plurality of people, in such a manner that the person depositing luggage, such as documents, a suitcase, or the like, in the locker 100 (hereinafter, this person is called the "depositor"), and the person removing the luggage L (hereinafter, this person is called the "recipient") are different persons. The locker 100 is of approximately the same size as a conventional coin-operated locker, although lockers of different sizes may also be provided, in accordance with different use requirements. The locker may also comprise a refrigerating function or a freezing function.

In broad terms, the wireless authentication system for managing this locker and controlling the opening and closing of the door of the locker, comprises a portable device 60 which is carried by the user (or plurality of users), a locking device 70 which comprises an electronic lock provided in each of the lockers 100 and controls the operation of it, and a management device 80 which manages the whole system.

The portable device 60 has a card shape or thin box shape which is carried by the user at all times, by inserting it in his or her pocket, or the like. On the front panel 400 of each locker 100, there are provided: a blue indicator lamp 74a, a red indicator lamp 74b, a display unit 75 for displaying messages, and the like, a selector button 71 for selecting a recipient from a user list, a confirmation button 72 for inputting a locking or unlocking signal, a depositor display button 73, or the like. The locking device 70 described hereinafter is provided on the rear side of the aforementioned panel.

The portable device 60 is the same as the identification signal transmitting device 10 described in the first embodiment, in that it comprises a transceiver, transmits an identification signal at a uniform intensity, receives an identification signal transmitted from the locking device 70, and issues warning signals. Since the reception operation is carried out before the transmission operation, it differs in respect of the timing of the transmission and reception operations, and in respect of the fact that it comprises a display unit for displaying received information. Furthermore, it is convenient if the respective portable devices 60 are connected detachably to a portable telephone 90 (90A, 90B, 90C, ...), in such a manner that telephone contact can be made between respective holders.

In the example illustrated, the portable device 60 is connected detachably to a portable telephone 90, but it is also possible for the portable device 60 to be incorporated into the portable telephone 90, in which case, the display unit may make use of the display unit of the portable telephone, or it may be provided separately. Furthermore, it is also possible to use a non-contact type card as a portable telephone. This non-contact type card has transmitting and receiving functions, but it is designed without incorporating a battery power source in order to reply to signals (the energy of received electromagnetic waves is converted to power ).

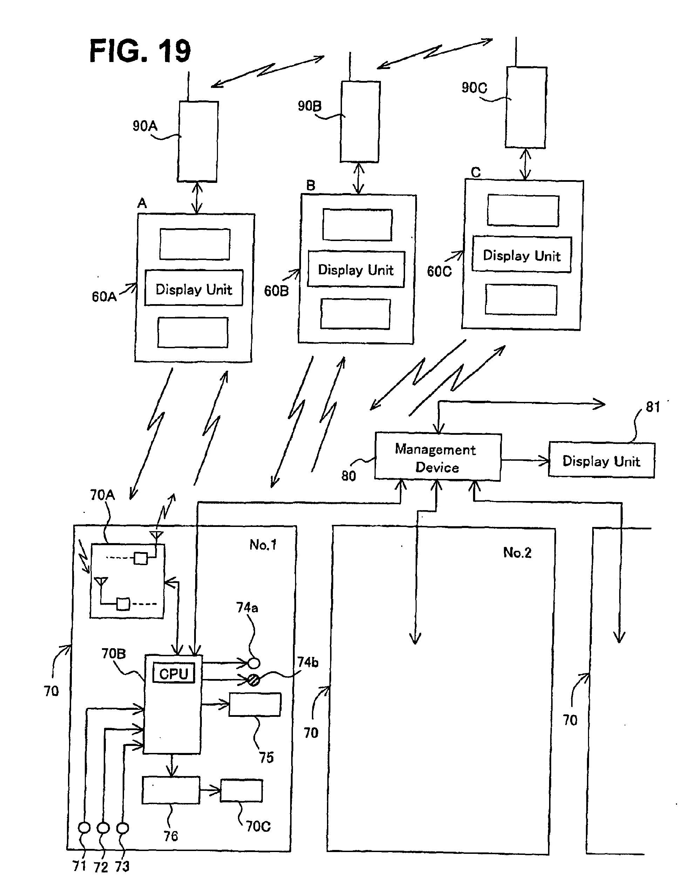

As shown in Fig. 19, the locking device 70 comprises a transmitting and receiving section 70A similar to that of the first embodiment described above, a control section 70B having a use restriction function similar to the appliance use function releasing device, and a control function for controlling the opening and closing of the electronic lock, and an electronic lock (electronic lock driving circuit) 70C. The control section 70B of the locking device 70 is constituted by a small microcomputer, which comprises a central processing unit (CPU) for processing data and input signals, a fixed storing section (ROM) for storing processing programs, and a temporary storing section (RAM) for temporarily storing data and input signals.

As illustrated in this diagram, the control section 70B is connected to an identification signal transmitting and receiving section 70A, a selection button 71, a confirmation button 72, and a depositor display button 73. When data or an input signal is received, the indicator lamps 74a, 74b and the display unit 75 are operated on the basis of data or instructions from the management device 80, or alternatively, the locking or unlocking of the electronic lock 70C is controlled. For the management device 80, a personal computer is used, which is provided with a keyboard and mouse, as input means, and a CRT display unit 81, a printer (not illustrated), and the like, as display means. The indicator lamp 74a is a blue lamp which flashes when the recipient of the luggage is near. The indicator lamp 74b is a red lamp, which indicates that the luggage has been inserted into the locker.

The confirmation button 72 not only provides input means for inputting locking and unlocking signals, but also comprises a function for indicating the start and end of a charge operation. As described hereinafter, the depositor display button 73 is a button used in cases where a plurality of scheme members each having a portable device 60 have approached the locker installation at the same time in order to deposit luggage, and the button is used to successively display, on the display unit 75, the member numbers of the plurality of scheme members, when identifying who of the plurality of members is the depositor in the case of a prescribed locker.

The management device 80 stores a list of system users (members) and respective locker numbers, in the form of a database, and incorporates a payment calculation program for a user to make payment in accordance with time data from a time means. It is connected in such a manner that the data stored in the database and the payment information based on the calculation result is transmitted to the control section 70B. Furthermore, the management device 80 also comprises a function whereby it can be connected to a public telephone line and management data can be transmitted to an external device, and a function for transmitting a signal for unlocking the electronic lock of a locker, compulsorily, in accordance with a command signal from an external or internal source, to the electronic locks of the respective lockers.

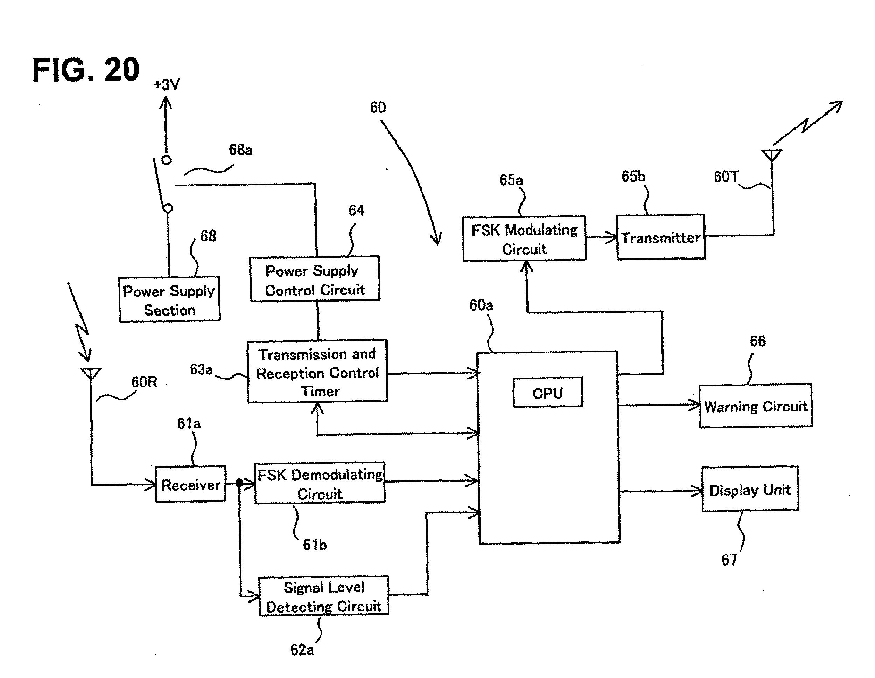

Fig. 20 shows an example of the composition of the portable device 60. The portable device 60 comprises a transmitter 65b for transmitting a previously determined identification signal from a transmission antenna 60, and a receiver 61a for receiving an identification signal transmitted by the transmitter of the locking device 70, as described hereinafter, by means of a reception antenna 60R.

The transmission system for transmitting the identification signal sends the aforementioned identification signal established in the identification code memory, at a timing command from the transmission and reception control timer 63a, and when FSK modulation has been carried out by means of a carrier wave, in the FSK modulating circuit 65a, then the identification signal is transmitted by the transmitter 65b. Numeral 64 denotes a power supply control circuit, 68 denotes a power supply section, which supplies power to the respective sections, when the switch 68a is closed by means of a signal from the power supply control circuit 64.

The reception system for receiving the aforementioned identification signal comprises the following elements, which are connected after the receiver 61a. Firstly, the received identification signal is FSK demodulated by the FSK demodulating circuit 61b, and is then supplied to a match judging section of a computing section 60a, which is constituted by a microcomputer. The computing section 60a comprises a match judging section, a signal occurrence judging section and an identification code memory, or the like, which are previously programmed in the fixed storing section. In the match judging section, the identification signal stored previously in the identification code memory is read out, and the matching state of each bit of the identification signal is calculated, in order to determine whether or not the identification signal is matching. If the output signal resulting from the computing process matches the prescribed identification signal, then a timing signal is transmitted to the signal occurrence judging section.

On the other hand, the identification signal received by the receiver 61a is also sent to the signal level detecting circuit 62a, and a signal representing the signal level detected in this circuit is transmitted to the signal occurrence judging section. In addition to the foregoing, the aforementioned signal from the FSK demodulating circuit 61b and an identification code signal from the identification code memory are also input to the signal occurrence judging section.

This signal occurrence judging section judges whether the aforementioned signal and the identification code signal are matching, as well as judging whether the signal level of the identification signal received within a prescribed time period t after reception of the timing signal from the match judging section is equal to or above a prescribed value. If either one or both of these two judgment conditions is satisfied, then an output signal for issuing a warning is not issued, whereas if the matching judgment is established and the signal level is also judged to be equal to or above the prescribed value, then a warning signal is output to the warning circuit 66, and a display is shown on the display unit 67.

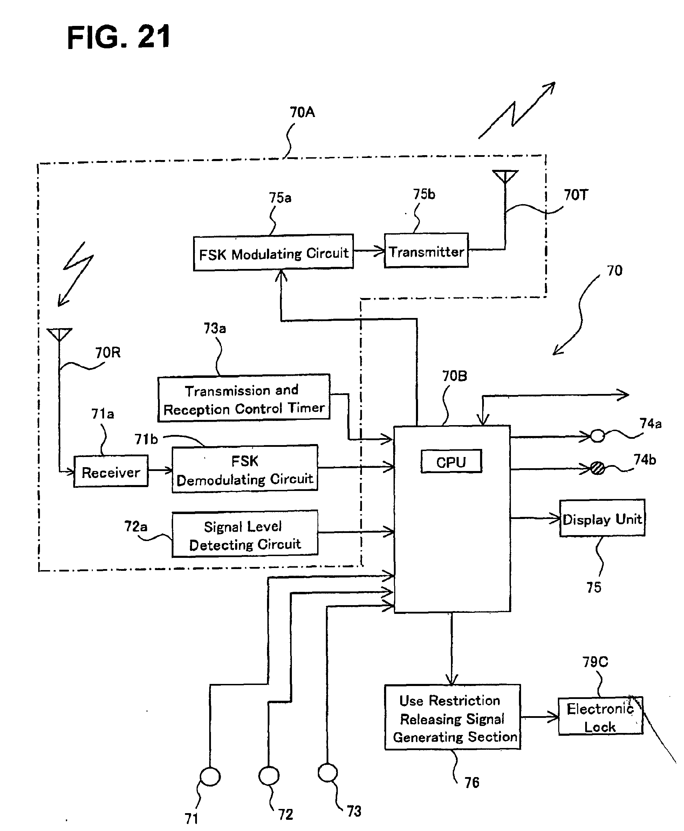

Fig. 21 shows an example of the composition of the locking device 70. The locking device 70 comprises a computing section 70a based on a microcomputer, similarly to the portable device 60, and this computing section 70a comprises a match judging section, a signal occurrence judging section, an identification code memory, and the like, which are previously programmed into a fixed storage region thereof.

Furthermore, the locking device 70 is similar to the portable device 60 in respect of the fact that it judges the occurrence of a signal in the signal occurrence judging section, on the basis of the identification signal sent by the portable device 60, and if no identification signal is received, and the signal level is a prescribed value or above, or if either one of these conditions is established, then the signal occurrence judging section does not output any signal. If this output signal is absent, then the use restriction releasing signal generating section 76 does not generate a use restriction releasing signal. It is different in respect of the fact that if an identification signal is received and the signal level thereof is a prescribed value, then an output signal is issued by the signal occurrence judging section, and consequently, the signal generating section 76 outputs a releasing signal, continuously. The remaining compositional elements are basically the same as the portable device 60 in Fig. 19, and these similar elements are labeled with similar reference numerals having the same last digit and 7 instead of 6 as the first digit.

There are two modes of operation for the function for transmitting the aforementioned identification signal from the portable device 60 and receiving it in the locking device 70, and the function for transmitting the identification signal from the locking device 70. In the first mode, the holder of the portable device 60 is a person depositing luggage. In the second mode, the holder is a person removing luggage. In the case of a depositor, the identification signal is transmitted by the portable device 60 and is received by the locking device 70. No identification code signal is transmitted by the locking device 70. In this case, a check is performed to see whether the identification signal received by the locking device 70 corresponds to a previously registered scheme member.

If the holder is a recipient, then an identification signal is transmitted by the locking device 70 and is received by the portable device 60. After a prescribed period of time has elapsed after reception of the aforementioned signal, the portable device 60 transmits its own identification signal as stored in the identification code memory. This signal is received by the locking device 70. The processing carried out by the locking device 70 and the portable device 60 is carried out respectively as described below.

When an identification signal is received from the portable device 60 by the locking device 70, by means of the receiver 71a, the signal is demodulated by the FSK demodulating circuit 71b and then judged by the match judging section, to see whether it is a matching or non-matching signal, whereupon a timing signal is output to the signal occurrence judging section. Furthermore, the signal level of the reception signal received by the receiver 71a is detected by the signal level detecting circuit 72a, and the signal occurrence judging section determines whether or not this signal level is equal to or above a prescribed value. This judgment of the signal level is made by setting a voltage threshold value for the reception signal in the detected waveform, and determining that a signal of a prescribed level or above has been received if this voltage level is exceeded.

As a result of the judgment performed by the signal occurrence judging section, even if the signal occurrence judging section has been input with a timing signal, if the signal received within a prescribed time period is lower than the prescribed level, then it is deduced that the portable device 60 is still separated by the prescribed distance or more, and hence in the locking device 70, no use restriction releasing signal is output, and therefore, it is not possible to unlock the electronic lock.

However, if a timing signal has been input and the received signal is judged to be of a prescribed level or above, then it is deduced that the portable device 60 has moved within the prescribed distance range of the locking device 70, whereby the signal occurrence judging section transmits a signal to the use restriction releasing signal generating section, and hence a use restriction releasing signal is issued. Therefore, the electrically restricted state of the drive circuit of the electronic lock is released, and hence it becomes lockable.

Furthermore, similarly to the locking device 70, if the identification signal sent by the locking device 70 is received by the portable device 60, this identification signal is demodulated by the FSK demodulating circuit 71b and supplied to the match judging section, and a timing signal dependent on the judgment made by same is supplied to the signal occurrence judging section, and furthermore, the signal level of the received signal is detected by a signal level detecting circuit 62a, and it is judged whether or not the signal level is equal to or above a prescribed level, within a prescribed judgment time period after the timing signal has been sent to the signal occurrence judging section.

However, if the conditions of receiving a timing signal and detecting a signal level of a prescribed level or above in the aforementioned judgment process are not established, then the signal occurrence judging section of the portable device 60 does not issue any output signal. If there is no such output signal, then it is deduced that the portable device 60 is separated from the locking device 70 by a prescribed distance or more, and hence no output signal is transmitted to the warning circuit 66 or the display unit 67.

However, if a timing signal has been input and the signal level is equal to or greater than a prescribed level, then it is deduced that the portable device 60 has approached within a prescribed distance range of the locking device 70, in which case, an output signal is issued, and the warning circuit 66 and display unit 67 are activated. In the warning circuit 66, for example, a "beep" type warning sound is issued, together with a voice message from a voice generator (not illustrated), thereby providing a warning, and if the holder is carrying the portable device 60 in his or her pocket, then this warning sound will alert him or her to the fact that someone has deposited luggage in a locker.

It is also possible to adopt a method wherein a warning is issued by various means, for instance, wherein the warning issued by the warning circuit 66 is either a beeping warning sound, or a beeping sound of this kind together with a message displayed on the display unit, or alternatively, a warning issued by means of warning lights, or the like.

By means of the wireless authentication system according to the present embodiment having the composition described above, luggage can be deposited in a locker and the locker can be locked and unlocked, in the following manner.

As described above, the lockers managed by means of this wireless authentication system are generally provided in numbers of 10 to several 100 in a same location, and this plurality of lockers are used by a plurality of people. The system can only be used by persons who have contracted to use the system and have been registered as scheme members. Once someone has become a member, they are supplied with an individual portable device 60, and the system can only be used on the condition that they are carrying this device with them. A membership number corresponding to an individual identification signal is assigned to each scheme member and is stored in the identification code memory of the portable device 60, in addition to which, necessary data, such as the membership numbers of all the scheme members, and the members names, addresses, and the like, are registered in the management device 80.

Furthermore, if a plurality of members who are depositing luggage are in the vicinity of the locker location at the same time, then the identification signals of the respective scheme members are transmitted to a plurality of unused lockers, and by pressing a depositor display button 73 on the touch panel of the display unit 75 of a locker, the membership numbers of the plurality of members who are in the vicinity of the lockers are displayed in sequence, and hence the depositor selects and inputs his or her own membership number, from amongst the displayed numbers, by means of a depositor selection key on the touch panel, by means of which signal, the depositor declares that he or she is seeking to use the locker identified by a particular number. In this case, the identification signals corresponding to the membership numbers of a plurality of scheme members are received by the transmitting and receiving section 70A of each (unused) locker.

The probability that the identification signals of a plurality of members will overlap completely within the same time frame is extremely low, and therefore, the identification signals of the plurality of members are received successively by the receiver, at a small timing interval between each signal, in the order in which they arrive. The received identification signals are sent by the transmitting and receiving section 70A to the control section 70B, the membership numbers are displayed on the display unit 75 in accordance with the control performed by the control section 70B, and the user then selects his or her own membership number.

Furthermore, in the electronic lock of each unused locker, even if the power supply to the drive circuit which drives the lock is switched on, the electrical locking function of the electronic lock will assume a use restricted state, and the mechanical locking function assumes a released (open) state, as the normal state thereof.

If a member B who is depositing luggage approaches an unused (empty) locker, for example, locker No.1, then the identification signal transmitted by his or her portable device 60 will be received by the receiver 71a of the transmitting and receiving section 70A of locker No.1. The identification signal thus received is demodulated by the FSK demodulating circuit 71b, and then sent to the control section 70B via the computing section 70a. The correspondence between member B and a membership number based on the aforementioned identification signal displayed on the display unit 75 is determined by means of an input signal from the selector button 73, whereupon the identification signal is transmitted to the management device 80, where it is checked to see that it matches the identification signal of the corresponding membership number in the membership list registered in the management device 80.

If the identification signal thus transmitted matches the membership number in the registered membership list, then the management device 80 returns a match signal, and on the basis of this match signal, the control section 70B transmits a signal to the use restriction releasing signal generating section 76. The drive circuit of the electronic lock is driven by the use restriction releasing signal issued by the generating section 76, and hence the electrically locked state of the electronic lock 70C is released and the use restricted state of the electronic lock is released. By this means, the electronic lock 70C assumes a lockable state, but until the locking operation is performed, the mechanical locking mechanism of the electronic lock remains open, and hence the member B depositing luggage can open the door, place the luggage in the locker, and then close the door.

Thereupon, when the member B presses the member. selector button 71, the registration numbers and member names in the registered membership list are transmitted, in sequence, to the display unit 75 by the management device 80. When the name and registration number of the member A who is meant to remove the luggage is displayed in the successively transmitted list of members, then that member A is selected by means of the user pressing the selector button 71. In this case, a display indicating "depositor", "recipient", "split payment", is shown on the display unit for the purpose of selecting who is to pay the fee for using the locker, and one of these options is selected via the touch panel of the display unit. When the confirmation button 72 is pressed, the electronic lock of that locker operate and the locker becomes locked by means of the mechanical locking mechanisms. At the same time, the red display lamp 24b lights up to indicate that the locker is in use.

When the member B has deposited luggage in the locker No.1 and locked the locker in this manner, then the member B will move away from the locker, but while the member B is still situated within the prescribed distance range from the locker, the electronic use restriction released state of the No.1 locker is maintained. However, when the member B moves outside of this prescribed distance range from the locker, then the level of the identification signal from the portable device 60 of member B will fall below the prescribed level at the receiver 71a of the use restriction releasing device, and hence the control section 70B halts transmission of the use restriction releasing signal, whereby the electronic lock assumes a use restricted state based on the electrical mechanism, and even if a scheme member other than member B, or a non-member, presses the confirmation button 72, he or she will not be able to release the locked state of the electronic lock.

When the member B has pressed the confirmation button 72 as described above, the membership numbers of members A and B are stored in the memory of the control section 70B, and they are also simultaneously transmitted to the management device 80. The identification signal of member A, who is the recipient stored in the memory of the control section 70B is sent externally, from the control section 70B of locker No.1, via the transmitter 75b, in a repeated fashion, at prescribed time intervals. If the member B owns or has use of a portable telephone, then he or she should send a message to member A, by portable telephone, indicating that he or she has deposited luggage in a locker.

Subsequently, the member A, who is the recipient, approaches the locker installation, and when he or she comes within the prescribed distance range of locker No.1, the identification signal of member A transmitted by the transmitter 75b of the transmitting and receiving section 70A of locker No.1 is received by the portable device 60A of member A, and if this identification signal matches the identification signal in the identification code memory of the portable device 60A, then a display such as "Luggage stored for member A", for example, is displayed on the display unit 67 of the portable device 60A, in order to indicate that luggage destined for member A has been deposited in the locker installation. Furthermore, in order to indicate that luggage has been deposited, it is also possible to transmit a signal to the warning circuit 66, and alert the user by means of a beeping sound, or a human voice which speaks the aforementioned display contents, in an audible form.

On the other hand, if the member A who is the recipient has come within the prescribed distance range of the locker No.1 of the locker installation, then the identification signal transmitted by the portable device 60A of the member A will be received by the receiver 71a of locker No.1. If the identification signal thus received matches the identification signal for member A stored previously in the identification code memory, then a match signal is issued, on the basis of which the control section 70B causes the blue display lamp 74a on locker No.1 to flash on and off, thus alerting the user to the fact that luggage destined for member A has been deposited in that locker. Furthermore, the control section 70B sends a signal to the use restriction releasing signal generating section 76, thereby releasing the electrically locked state of the electronic lock 70C. At the same time, the control section 70B sends the aforementioned match signal to the management device 80.

The management device 80 calculates payment on the basis of the time for which the luggage has been deposited, and it returns this payment data to the control section 70B.

When the payment data from the management device 80 is returned, the control section 70B orders the display unit 75 to show, for example "Hello, member A. Member B has deposited luggage for you. The fee is XX yen, and you are responsible for paying this fee." or the like. When the member A presses the confirmation button 22, the mechanical lock of the electronic lock 70C is released by the signal issued thereby, the door can be opened, and member A can remove the luggage that was deposited in the locker. The signal issued when the confirmation button 22 is pressed by member A is also sent from the control section 70B to the management device 80, and the management device 80 stores the data and uses it as evidence for payment demand at a later date.

When the confirmation button has been pressed, the red display lamp 74b indicating that locker No.1 is in use, and the display lamp 74a indicating to member A that luggage has been deposited, are both switched off. However, the electrically released state of the electronic lock 70C is maintained, since the identification signal from the portable device 60A of member A continues to be transmitted at prescribed time intervals. When the member A has moved a prescribed distance or more away from the locker installation, then the generation of the use restriction releasing signal is halted, whereby the electrical locking mechanism of the locker is returned again to the use restricted state, and the mechanical lock of the electronic lock 70C remains in a released state.

Since the management device 80 is connected externally via a public telephone line, if a management center is established, the management devices of locker installations situated in a plurality of locations are connected to same, and all of the data transmitted to and stored in the respective management devices 80 is collected and stored in the central computer of the management center, then demands for payment, and the like, can be centralized, and hence management is greatly simplified.

In the foregoing, a case was described wherein the luggage is transferred from member B to member A, by means of a locker, but in a case where the lockers are used by a plurality of members who deposit luggage, such as members C, D, E, ..., then in order to guarantee the security of the deposited luggage, even if the recipient is to be the same person, member A, each of the members C, D, E, ... selects and uses a locker of a different number to locker No.1, in a separate fashion, such that there is a one to one relationship between the depositor and the recipient.

If the aforementioned was is used, then there may arise cases where the member A who is the recipient does not come to collect the luggage for a long period of time, or cases where the member A wishes to use a locker for his or her own purposes. In a case where the luggage has not been collected after a prescribed time period has passed, the time period is calculated by the timer in control section of the locker, and if the time for which the luggage has been deposited exceeds a prescribed time, then an overtime signal is transmitted to the management device 80, and the administrator of the management device 80 communicates with the member A by means of telephone, or other communications means, and if member A has no intention to remove the luggage, then a signal for compulsorily unlocking the electronic lock 70C of the locker is sent out by the management device 80. Upon receiving this signal, the electronic lock 70C assume a use restriction released state, and when the confirmation button 72 is pressed, the electronic lock 70C will be unlocked.

Furthermore, if member A wishes to use a locker for his or her own purposes, then although member A is the depositor, provided that that member's identification signal has been registered in the membership list, a use restriction releasing signal will be sent to the unused lockers, whereupon the electronic lock 70C of each unused locker is released from its use restricted state, and hence it becomes lockable. The member selects any of the unused lockers, deposits the luggage therein, and can then lock the locker by pressing the corresponding confirmation button. If the member selected by the selector button 21 is A, then this means that the depositor and the recipient are the same person, but apart from this, the procedure is the same as a case where luggage is deposited by member B and collected by member A, and hence the subsequent unlocking procedure can also be carried out in the same manner.

In the foregoing embodiment, transmitting and receiving sections are provided respectively in the portable device 60 and the locking device 70, and locking and unlocking of the electronic locks is carried out by means of two-way communications, but it is also possible to adopt a system wherein the aforementioned wireless authentication system is achieved by means of one-way communications. Although not shown in the drawings, in this case, the communicating means of the portable device 60 comprises only a transmitter, and the warning circuit 66 and display unit 67 are omitted. Moreover, the communicating means of the locking device 70 of the locker should comprise only a receiving circuit, which is realized by the receiving section 70A'. The remaining composition, functions and operations are the same as those in the case of the embodiment based on two-way communications.

In the wireless authentication system based on one-way communications described above, when a member holding a portable device 60 has moved within a prescribed distance range of the locker, it is not possible to display on the portable device 60 which of the lockers contains deposited items that have been specified for that member, and therefore, it is not possible to tell from the portable device that items have been deposited, but if the member approaches the locker installation while carrying the portable device 60, then he or she will be able to tell that luggage has been deposited, by means of the display units on the lockers and the display lamps thereon. Furthermore, the locking and unlocking functions, and their operation, are exactly the same as the foregoing, and the basic functions for using the locker can be maintained.

### (Fourth embodiment)

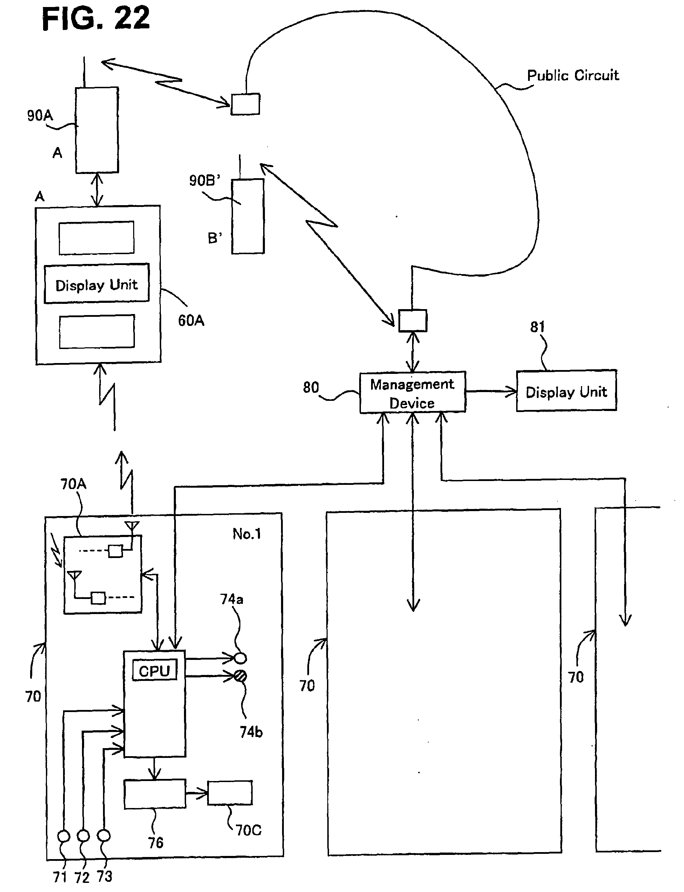

Fig. 22 is an approximate block diagram of a wireless authentication system according to a fourth embodiment. This wireless authentication system is a system whereby a non-member B' is able to deposit an item in a locker and thereby transfer it to a scheme member A. This system is the same as the third embodiment in respect of the fact that the member carries a portable device 60, and the locker comprises a locker locking device 70 and a management device 80, but since the non-member B' does not carry a portable device 60, then it is supposed that he or she is carrying a portable telephone 90B'. Furthermore, although the member A may carry a portable telephone 90A, this telephone does not have to be a portable telephone and may also be a general domestic telephone.

According to this system, when the non-member B' is standing at the locker installation, and wishes to use a locker to deposit luggage for the member A, then the member A confirms by means of a portable telephone or a general telephone, who the corresponding non-member B' is and what they want to use the locker for, and the member A can then determine, selectively, if that person is or is not someone who can be authorized to use the system.

Firstly, if the non-member B' approaches the locker installation and wishes to deposit luggage for member A in any one of the lockers, then B' will telephone the locker management company, from his or her portable telephone 90B' (the telephone number of the management company being displayed on the lockers). This telephone call passes via the telephone line of the management device 80 and is transferred to the portable telephone or standard telephone of the member A. In this case, a message is transferred indicating, for example, "This is the locker management company. At present, a person having telephone number 0x0 - xxxx - xxxx says that he/she wishes to deposit luggage for you, in a locker at location YY. To approve depositing of the luggage, press #1, and to refuse, press #2. The locker use fee will be charged to you."

The member A enquires who the non-member B' is, and why they want to deposit luggage in the locker, and if member A does not approve use of the locker, then he or she may refuse the use of the locker, by sending signal #2. If member A wishes to approve use of the locker, then he or she sends signal #1. If use is refused by means of the #2 signal, then the non-member B' is not able to lock the locker, even if he places luggage inside it, and therefore, the locker cannot be used. If the #1 signal is sent, then the electronic lock 70C of the prescribed locker is set to a use restriction released state, by means of an instruction from the management device 80. The non-member B' places the item(s) in the locker, closes the door, and presses the confirmation button 22, whereupon the locker is locked. The operation whereby the member A unlocks the locker and retrieves the items is the same as that in the case of the third embodiment.

In this fourth embodiment also, the portable device 60A held by the member A is described as having a two-way communications function, but similarly to the third embodiment, it may also have a one-way communications function.

The common merits of the wireless authentication system according to the third and fourth embodiments are listed below.
(1) Luggage can be transferred by means of a locker, to the same person, or to a third party, for instance, between respective scheme members, or between a member and a non-member.
(2) Of the depositor and the recipient, at least the recipient must be a scheme member, but since at least one of the parties is a scheme member, then payment can be managed by the management device, and the lockers can be used without depositing cash.
(3) Since the use time is controlled automatically, it is possible to establish a finely graduated payment scheme.
(4) Since the identity of the user of the locker, and the use time, are recorded, it is also possible to prevent illegal use of the lockers.
(5) Since the user is confirmed in a reliable manner, the security of the luggage is high.
(6) If luggage is delivered to a recipient by means of a parcel delivery service or home shopping service, then provided that the employee of the delivery or shopping service is a scheme member, he or she can use the lockers as a scheme member, and hence the lockers can be used instead of delivering items to the recipient's home, and, for example, luggage is conveyed only to a determined location, such as a station, and therefore delivery costs can be reduced. Even if goods are delivered while the recipient is away from home, the recipient can take possession of the goods at a locker in the determined location, such as a station, or the like, rather than having to go to a specified location to collect them.
(7) This system can be used in place of existing lockers in a station, or the like, in a new installation, and it can be used to transfer various types of luggage between individuals, such as documents, video tapes, and the like.

As described in detail above, in the wireless authentication system according to the present invention, a locking device for locking and unlocking an electronic lock in a locker is connected to a management device for managing same, and in combination with a portable device which transmits an identification signal, the use restricted state of the electronic lock is released by means of an identification signal from the portable device of a depositing party, or a signal from the recipient transmitted via the management device, and luggage is placed in the locker and the locker is locked, whereupon, when the recipient approaches, a use restriction releasing state is generated by the identification signal from same, and the locker is unlocked upon input of a confirmation signal, and therefore, it is possible to transfer luggage between respective scheme members or between a member and a non-member, by means of the locker, thus providing excellent convenience of use whereby luggage can be transferred from one person to another, in comparison to conventional lockers which can only be used by the same person.

### INDUSTRIAL APPLICABILITY

The present invention can be used broadly in a wireless authentication system for performing authentication by means of radio signals, and more specifically, it can be used in a wireless authentication system for preventing loss, theft, illegal use or unauthorized use of various appliances, such as portable telephones, portable computers, and the like.

Moreover, the present invention can also be used in a wireless authentication system for payment cards, wherein payments are settled by means of a bank card, such as a credit card, or the like.

Furthermore, the present invention can also be used in a container, such as a locker, or the like, in which a user deposits luggage temporarily.

## Claims

1. A wireless authentication system comprising a signal transmitting device and a use restriction releasing device, and having functions for restricting use of an appliance to which it is applied,
wherein the signal transmitting device comprises:
a first transmitter for transmitting a prescribed first code signal at a prescribed intensity, by means of a radio signal;
a first receiver for receiving a prescribed second code signal transmitted by said use restriction releasing device by means of a radio signal; and
a first judging section for outputting a warning signal, if the signal level of said second code signal received by said first receiver is less than a prescribed value;
said use restriction releasing device comprises:
a second transmitter for transmitting said second code signal at a prescribed intensity, by means of a radio signal;
a second receiver for receiving said first code signal transmitted by said first transmitter, by means of a radio signal; and
a second judging section whereby a use restriction releasing signal for releasing the use restriction of said appliance to which the system is applied is transmitted to said appliance, if said first code signal received by said second receiver is the identification signal for that appliance, and if the signal level of said first code signal is equal to or greater than a prescribed value, and whereby the transmission of said use restriction releasing signal is halted if said signal level is less than said prescribed value.

2. A wireless authentication system comprising a signal transmitting device and a use restriction releasing device, and having functions for restricting use of an appliance to which the system is applied;
wherein said signal transmitting device comprises:
a first transmitter for transmitting a prescribed first code signal at a prescribed intensity, by means of a radio signal;
a first receiver for receiving a prescribed second code signal transmitted by said use restriction releasing device by means of a radio signal; and
a first judging section for outputting a warning signal, if the signal level of said second code signal received by said first receiver is less than a prescribed value;
said use restriction releasing device comprises:
a second transmitter for transmitting said second code signal at a prescribed intensity, by means of a radio signal;
a second receiver for receiving said first code signal transmitted by said first transmitter, by means of a radio signal; and
a second judging section whereby the transmission of a use restricting signal for restricting the use of said appliance to which the system is applied, to said appliance, is halted, if said first code signal received by said second receiver is the identification signal for that appliance, and if the signal level of said first code signal is equal to or greater than a prescribed value, and whereby said use restricting signal is transmitted to said appliance, if said signal level is less than said prescribed value.

3. The wireless authentication system according to claim 1 or claim 2, wherein said second judging section also outputs a warning signal if said signal level is less than said prescribed value.

4. The wireless authentication system according to any one of claims 1 to 3, wherein said first transmitter transmits said first signal with prescribed time intervals.

5. The wireless authentication system according to any one of claims 1 to 4, wherein said second transmitter transmits said second signal with prescribed time intervals.

6. The wireless authentication system according to any one of claims 1 to 5, wherein said first code signal and said second code signal are the same code signal; and
said use restriction releasing device transmits said first code signal received by said second receiver, as said second code signal, by means of said second transmitter, after said signal transmitting device has transmitted said first code signal by means of said first transmitter.

7. The wireless authentication system according to any one of claims 1 to 5, wherein said first code signal and said second code signal are the same code signal, and;
said signal transmitting device transmits said second code signal received by said first receiver, as said first code signal, by means of said first transmitter, after said use restriction releasing device has transmitted said second code signal by means of said second transmitter.

8. The wireless authentication system according to any one of claims 1 to 7, wherein said first code signal and said second code signal are respectively constituted by a binary pseudo-random signal and a unique code signal which follows the binary pseudo-random signal.

9. The wireless authentication system according to claim 8, wherein said first judging section judges whether or not said unique code signal contained in said second code signal received by said first receiver within a prescribed time period after a timing signal obtained on the basis of said binary pseudo-random signal contained in said second code signal received by said first receiver, matches a unique code signal held by said judging section, and also judges whether or not the signal level of said unique code signal contained in said second code signal is equal to or greater than said prescribed value, and if the unique code signal contained in said second code signal matches the unique code signal held by said judging section, and if said signal level is equal to or greater than said prescribed value, then said warning signal is not output, and if said signal level is less than said prescribed value, then said warning signal is output.

10. The wireless authentication system according to claim 9,
wherein said first judging section comprises:
a first matching and adding section for adding up the number of matching bits in the binary pseudo-random signal held by the judging section and said binary pseudo-random signal contained in said second code signal, performing pulse compression, and outputting the total number of matching bits as a pulse compression signal; and
a first threshold value processing section for outputting said timing signal, if the pulse compression signal output by said first matching and adding section is greater than a prescribed threshold value.

11. The wireless authentication system according to any one of claims 8 to 10, wherein said second judging section judges whether or not said unique code signal contained in said first code signal received by said second receiver within a prescribed time period after a timing signal obtained on the basis of said binary pseudo-random signal contained in said first code signal received by said second receiver, matches a unique code signal held in said judging section, as well as judging whether or not the signal level of said unique code signal contained in said first code signal is equal to or greater than a prescribed value, so that transmission of said signal is permitted or halted.

12. The wireless authentication system according to claim 11,
wherein said second judging section comprises:
a second matching and adding section for adding up the number of matching bits in the binary pseudo-random signal held by the judging section and said binary pseudo-random signal contained in said first code signal, performing pulse compression, and outputting the total number of matching bits as a pulse compression signal; and
a second threshold value processing section for outputting said timing signal, if the pulse compression signal output by said second matching and adding section is greater than a prescribed threshold value.

13. The wireless authentication system according to any one of claims 8 to 12, wherein said binary pseudo-random signal is a C/A code, P code or linear FM signal.

14. The wireless authentication system according to any one of claims 1 to 7, wherein said first code signal and said second code signal are respectively constituted by an M-sequence signal and a unique code signal which follows the M-sequence signal.

15. The wireless authentication system according to claim 14, wherein said first judging section judges whether or not said unique code signal contained in said second code signal received by said first receiver within a prescribed time period after a timing signal obtained on the basis of said M-sequence signal contained in said second code signal received by said first receiver, matches a unique code signal held in said judging section, as well as judging whether or not the signal level of said unique code signal contained in said second code signal is equal to or greater than said prescribed value, and if the unique code signal contained in said second code signal matches said unique code signal held by said judging section, and if said signal level is equal to or greater than said prescribed value, then said warning signal is not output, whereas if said signal level is less than said prescribed value, then said warning signal is output.

16. The wireless authentication system according to claim 15, wherein said first judging section comprises:
a first matching and adding section for adding up the number of matching bits in an M-sequence signal held by said judging section and said M-sequence signal contained in said second code signal, performing pulse compression, and outputting the total number of matching bits as a pulse compression signal; and
a first threshold value processing section for outputting said timing signal, if said pulse compression signal output by said first matching and adding section is greater than a prescribed threshold value.

17. The wireless authentication system according to any one of claims 14 to 16, wherein said second judging section judges whether or not said unique code signal contained in said first code signal received by said second receiver within a prescribed time period after a timing signal obtained on the basis of said M-sequence signal contained in said first code signal received by said second receiver, matches a unique code signal held by said judging section, as well as judging whether or not the signal level of said unique code signal contained in said first code signal is equal to or greater than said prescribed value, so that the transmission of said signal is permitted or halted on the basis of said judgment result.

18. The wireless authentication system according to claim 17, wherein said second judging section comprises:
a second matching and adding section for adding up the number of matching bits in an M-sequence signal held by said judging section and said M-sequence signal contained in said first code signal, performing pulse compression, and outputting the total number of matching bits as a pulse compression signal; and
a second threshold value processing section for outputting said timing signal, if said pulse compression signal output by said second matching and adding section is greater than a prescribed threshold value.

19. The wireless authentication system according to any one of claims 8 to 18, wherein said appliance to which the system is applied is a portable telephone, and said unique code signal is a signal indicating the telephone number of said portable telephone.

20. The wireless authentication system according to any one of claims 8 to 18, wherein said unique code signal is a signal indicating the identification number of the appliance to which the system is applied, or is a signal indicating information of the owner or administrator of the appliance to which the system is applied.

21. The wireless authentication system according to any one of claims 1 to 20, wherein said signal transmitting device further comprises a warning section for receiving said warning signal from said first judging section, and outputting a sound including a buzzer, or displaying a visual warning including a indicator lamp, upon reception of said warning signal.

22. The wireless authentication system according to any one of claims 1, and 3 to 21, wherein said appliance to which the system is applied is a portable telephone.

23. The wireless authentication system according to any one of claims 2 to 21, wherein said appliance to which the system is applied is a word processor, a computer, an automobile door, a safe, a game machine, or a repeater connected to a communications network.

24. The wireless authentication system according to claim 23, wherein said appliance to which the system is applied is an automobile door, said use restricting device being incorporated into the automatic door locking device of said automobile door and the tail lamps or directional indicator lamps of said automobile being caused to flash upon receiving said use restricting signal.

25. A wireless authentication system comprising an authenticated settlement device, an authentication device, and an optional authentication device, for performing multiple-level authentication and settlement relating to payment cards, including credit cards;
wherein said authenticated settlement device comprises:
a storing section for storing cardholder data including card information for said payment cards and identification information for said cardholders;
a first authenticating section for performing first authentication by comparing said card information transmitted by a card settlement terminal having a card reader, with card information contained in said cardholder data; and
a first transmitting section for transmitting the identification information for the cardholder corresponding to said card information transmitted by said card settlement terminal, if both of card information are matching as a result of said first authentication performed by said first authenticating section, to said optional authentication device;
wherein said optional authentication device comprises:
a second transmitting section for transmitting said identification information transmitted from said first transmitting section to said authentication device, by means of a radio signal; and
a second receiving section for receiving identification information transmitted from said authentication device by means of a radio signal; and
said authentication device comprises:
a second authenticating section for performing second authentication by comparing said identification information transmitted by said second transmitting section by means of a radio signal, with the identification information held by said authentication device; and
a third transmitting section for transmitting the identification information held by said authentication device to said optional authentication device by means of a radio signal, if said both of identification information are matching.

26. The wireless authentication system according to claim 25, wherein said second receiving section of said optional authentication device confirms that said authentication device is situated within a prescribed distance, on the basis of the reception signal level of the identification information transmitted by means of a radio signal by said third transmitter section of said authentication device.

27. The wireless authentication system according to claim 25 or claim 26, wherein said first transmitting section encrypts at least said identification information before transmitting.

28. The wireless authentication system according to claim 27, wherein said second authenticating section performs said second authentication by decrypting at least said encrypted identification information.

29. The wireless authentication system according to any one of claims 25 to 28,
wherein said second transmitter section transmits said identification information transmitted by said third transmitter and received by said second receiver, to said authenticated settlement device; and
said first authenticating section performs a third authentication by comparing said identification information transmitted by said second transmitting section with the identification information for the cardholder corresponding to said card information, stored in said storing section.

30. The wireless authentication system according to claim 29,
wherein said first transmitting section transmits said third authentication result to said optional authentication device;
said optional authentication device supplies said third authentication results transmitted by said first transmitting section to said card settlement device; and
said card settlement device displays said authentication result on a display.

31. The wireless authentication system according to claim 30, wherein said second transmitting section transmits said third authentication result to said authentication device.

32. The wireless authentication system according to claim 30 or claim 31,
wherein said authentication device is connected to a portable terminal, on the basis of said third authentication result, and sends the transmitter identification information of itself, to said authenticated settlement device, by means of radio signals, via said portable terminal;
said storing section of said authenticated settlement device also stores the transmitter identification information of said portable terminal, in association with said card information; and
said first authenticating section performs fourth authentication by comparing the transmitter identification information stored in said storing section and the transmitter identification information transmitted by said portable terminal.

33. The wireless authentication system according to claim 32, wherein said first transmitting section transmits said fourth authentication result to said optional authentication device;
said optional authentication device supplies said fourth authentication result transmitted by said first transmitting section to said card settlement device; and
said card settlement device displays said fourth authentication result on the display.

34. The wireless authentication system according to claim 33,
wherein said card settlement device transmits payment amount data input via an input device, to said authenticated settlement device, if said fourth authentication result indicates that authentication has been made; and
said authenticated settlement device performs settlement processing on the basis of said payment amount data.

35. The wireless authentication system according to any one of claims 32 to 34, wherein said first to third authentications and said fourth authentication are carried out in parallel.

36. A wireless authentication system comprising an authenticated settlement device, an authentication device, and an optional authentication device, for performing multiple-level authentication and settlement relating to payment cards, including credit cards;
wherein said authenticated settlement device comprises:
a storing section for storing cardholder data including card information for said payment cards and identification information for cardholders;
a first authenticating section for performing first authentication by comparing said card information transmitted by a card settlement terminal having a card reader, with card information contained in said cardholder data;
a first transmitting section for transmitting the identification information for the cardholder corresponding to said card information transmitted by said card settlement terminal, to said optional authentication device, if both of card information are matching as a result of said first authentication performed by said first authenticating section; and
a settling section for carrying out settlement processing on the basis of payment amount data transmitted by said card settlement terminal;
said optional authentication device comprises:
a second transmitting section for transmitting said identification information transmitted from said first transmitting section to said authentication device, by means of a radio signal; and
a second receiving section for receiving identification information transmitted from said authentication device by means of a radio signal; and
a transmission instructing section for supplying an instruction to said card settlement terminal for transmission of said payment amount data to said authenticated settlement device, when said second receiving section receives said identification signal; and
said authentication device comprises:
a second authenticating section for performing second authentication by comparing said identification information transmitted by said second transmitting section by means of a radio signal, with the identification information held by said authentication device; and
a third transmitting section for transmitting the identification information held by said authentication device to said optional authentication device by means of a radio signal, if both of identification information are matching.

37. A wireless authentication system comprising an authenticated settlement device, and an authentication device including a portable terminal carried by a cardholder, for performing multiple-level authentication and settlement relating to payment cards, including credit cards;
wherein said authenticated settlement device comprises:
a storing section for storing cardholder data including card information for said payment cards and identification information for said cardholders;
an authenticating section for performing authentication by comparing said card information transmitted by a card settlement terminal having a card reader, with card information contained in said cardholder data; and
a transmitting section for transmitting data indicating that authentication has been carried out, to said authentication device, if authentication is carried out by said authenticating section; and
wherein said authentication device comprises a display section for displaying said data transmitted by said transmitting section.

38. A wireless authentication system comprising an authenticated settlement device, an authentication device, and an optional authentication device, for performing multiple-level authentication and settlement relating to payment cards, including credit cards;
wherein said authenticated settlement device comprises:
a storing section for storing cardholder data including card information for said payment cards and identification information for said cardholders;
a first authenticating section for performing authentication by comparing said card information transmitted by said card settlement terminal having a card reader, with card information contained in said cardholder data; and
a second authenticating section for performing authentication by comparing the identification information of the cardholder transmitted from said authentication device via said optional authentication device, with said identification information contained in said cardholder data;
wherein said optional authentication device comprises a transmitting and receiving section for receiving identification information transmitted by said authentication device and transmitting said received identification information to said authenticated settlement device; and
said authentication device comprises a transmitting section for transmitting said identification information held in itself.

39. The wireless authentication system according to one of claims 25 to 38, wherein said card information comprises at least one of: the name of the cardholder, the card number of the holder, the expiration date of the payment card, the status of a loss report of said payment card, the portable telephone number of the holder, and a payment log.

40. A wireless authentication system comprising: a locking device, provided on a container having a door equipped with an electronic lock, for locking and unlocking the electronic lock of the door, a management device for managing said locking device, portable devices held by users including a depositor who deposits luggage in said container and a recipient who receives the deposited luggage, and having a function for locking and unlocking said door;
wherein said locking device comprises:
a first receiving section for receiving identification information for a depositor or recipient transmitted by said portable device, by means of radio signals;
a transmitting and receiving section for transmitting and receiving the identification information or a match signal, to and from said management device;
a first input section for inputting the identification information of the recipient;
a second input section for inputting confirmation of said depositor or recipient; and
a control section whereby, if said container is in an unused state, and if the signal level of the identification information received from said first receiving section is equal to or above a prescribed value, then said identification information is transmitted to said management device by said transmitting and receiving section, the use restricted state of said electronic lock is released when a match signal is received from said management device by said transmitting and receiving section, after transmitting said identification information, and said electronic lock is locked upon input of confirmation to said second input section, whereas if said container is in a used state, and if the signal level of the identification information received from said first receiving section is equal to or above a prescribed value, and if the identification information received by said receiving section and the identification information input by said first input section are matching, then the use restricted state of said electronic lock is released and said electronic lock is unlocked upon input of confirmation to said second input section; and
said management device comprises:
a storing section for storing identification information of said user; and
a judging section for comparing the identification information transmitted by said locking device in an unused state and the identification information stored in said storing section, and transmitting said match signal to said locking device if said information is matching; and
said portable device comprises a transmitting section for holding the identification information of the user of said portable device, and transmitting said identification information thus held to said locking device.

41. A wireless authentication system comprising: a locking device, provided on a container having a door equipped with an electronic lock, for locking and unlocking the electronic lock of the door, a management device for managing said locking device, a portable device held by a recipient of luggage deposited in said container, and having a function for locking and unlocking said door;
wherein said locking device comprises:
a first receiving section for receiving identification information for the recipient transmitted by said portable device, by means of radio signals;
a second receiving section for receiving an unlocking instruction from said management device;
a first input section for inputting the identification information of the recipient;
a second input section for inputting confirmation of said depositor or recipient; and
a control section whereby if said container is in an unused state, the use restricted state of said electronic lock is released on the basis of an unlocking instruction received from said second receiving section, said electronic lock is locked upon input of confirmation to said second input section, whereas said container is in a used state, if the signal level of the identification information received by said first receiving section is equal to or above a prescribed value, and if the identification information received by said first receiving section and the identification information input by said first input section are matching, then the use restricted state of said electronic lock is released and said electronic lock is unlocked upon input of confirmation to said second input section; and
said management device comprises:
a transferring section for transferring a communication by means of a telephone line from a depositor of luggage into said container, to a telephone held by said recipient; and
a first transmitting section for transmitting a permission to use the container on the basis of a communication by means of said telephone line from said recipient, as said unlocking instruction; and
said portable device comprises a second transmitting section for holding identification information for a recipient and transmitting said identification information thus held to said locking device.

42. The wireless authentication system according to claim 40 or 41, wherein the identification information received by said first receiving section is constituted by a binary pseudo-random signal and a unique code signal following the binary pseudo-random signal.

43. The wireless authentication system according to claim 42, wherein said control section judges whether or not the signal level of said unique code signal received by said first receiving section within a prescribed time period from a timing signal obtained on the basis of the binary pseudo-random signal received by said first receiving section, is equal to or greater than said prescribed value, and judging whether or not said unique code signal matches a unique code signal held in said control section.

44. The wireless authentication system according to claim 43, wherein said control section comprises:
a first matching and adding section for adding up the number of matching bits in the binary pseudo-random signal held by the control section and the binary pseudo-random signal received by said first receiving section, performing pulse compression, and outputting the total number of matching bits as a pulse compression signal; and
a first threshold value processing section for outputting said timing signal, if the pulse compression signal output by said first matching and adding section is greater than a prescribed threshold value.

45. The wireless authentication system according to any one of claims 42 to 43, wherein said binary pseudo-random signal is a C/A code, P code or linear FM signal.

46. The wireless authentication system according to claim 40 or claim 41, wherein the identification information received by said first receiving section consists of an M-sequence signal and a unique code signal following the M-sequence signal.

47. The wireless authentication system according to claim 46, wherein said control section judges whether or not the signal level of said unique code signal received by said first receiving section within a prescribed time period from a timing signal obtained on the basis of the M-sequence signal received by said first receiving section, is equal to or greater than said prescribed value, as well as judging whether or not said unique code signal matches the unique code signal held by said control section.

48. The wireless authentication system according to claim 47, wherein said control section comprises:
a first matching and adding section for adding up the number of matching bits in the M-sequence signal held by the control section and the M-sequence signal received by said first receiving section, performing pulse compression, and outputting the total number of matching bits as a pulse compression signal; and
a first threshold value processing section for outputting said timing signal, if the pulse compression signal output by said first matching and adding section is greater than a prescribed threshold value.

49. The wireless authentication system according to any one of claims 40 to 48,
wherein said storing section of said management device stores data including a user list and container numbers;
and said management device further comprises:
a charging section for charging on the basis of the time period from the time at which luggage is deposited in said container to the time at which the luggage is retrieved from same; and
a third transmitting section for transmitting said data or charge information created by said charging section, to said control section of said locking device.

50. The wireless authentication system according to any one of claims 40 to 49, wherein said locking device further comprises a transmitting section for transmitting identification information for said recipient input by said first input section, by means of a radio signal, if said container is in a used state;
wherein said portable device comprises:
a receiving section for receiving identification information transmitted by said transmitting section; and
an outputting section for visually displaying a notification indicating the presence of luggage in the container, or for outputting a notification by means of sound, if the identification information received by said receiving section matches the identification information held in itself.

51. The wireless authentication system according to claim 50, wherein the identification information received by said receiving section is constituted by a binary pseudo-random signal and a unique code signal following the binary pseudo-random signal.

52. The wireless authentication system according to claim 51, wherein said outputting section judges whether or not the signal level of said unique code signal received by said receiving section within a prescribed time period after a timing signal obtained on the basis of said received binary pseudo-random signal is equal to or greater than said prescribed value, as well as judging whether or not said unique code signal matches the unique code signal held in itself.

53. The wireless authentication system according to claim 52, wherein said outputting section comprises:
a second matching and adding section for adding up the number of matching bits in the binary pseudo-random signal held by the outputting section and said received binary pseudo-random signal, performing pulse compression, and outputting the total number of matching bits as a pulse compression signal; and
a second threshold value processing section for outputting said timing signal, if the pulse compression signal output by said first matching and adding section is greater than a prescribed threshold value.

54. The wireless authentication system according to claim 50, wherein the identification information received by said receiving section is constituted by an M-sequence signal and a unique code signal following the M-sequence signal.

55. The wireless authentication system according to claim 54, wherein said outputting section judges whether or not the signal level of said unique code signal received by said receiving section within a prescribed time period after a timing signal obtained on the basis of said received M-sequence signal is equal to or greater than said prescribed value, as well as judging whether or not said unique code signal matches the unique code signal held in itself.

56. The wireless authentication system according to claim 55, wherein said outputting section comprises:
a second matching and adding section for adding up the number of matching bits in the M-sequence signal held by the outputting section and said received M-sequence signal, performing pulse compression, and outputting the total number of matching bits as a pulse compression signal; and
a second threshold value processing section for outputting said timing signal, if the pulse compression signal output by said first matching and adding section is greater than a prescribed threshold value.

57. The wireless authentication system according to any one of claims 40 to 56, wherein said locking device further comprises a display section for displaying a list of users of said container; and
said first input section inputs the identification information for a recipient selected from the list of users displayed on said display section.

58. The wireless authentication system according to any one of claims 40 to 57, wherein said portable device is connected detachably to a portable telephone or is incorporated internally into the portable telephone.

59. The wireless authentication system according to any one of claims 40 to 57, wherein said portable device is a non-contact type card, and has a converting section for converting received electromagnetic waves to power as power supply.
